# EUROPEAN PATENT SPECIFICATION

(11) **EP 1 701 278 B1**
(45) Date of publication and mention of the grant of the patent: **19.11.2008**
(21) Application number: 06251260.3
(22) Date of filing: 09.03.2006
(51) Int. Cl.: G06F 17/30, H04L 29/08

(54) **Storage network system**
Netzwerkspeichersystem
Système de stockage réseau

(30) Priority: 09.03.2005 JP 2005065717
(43) Date of publication of application: 13.09.2006
(73) Proprietor: Hitachi, Ltd., Tokyo (JP)
(72) Inventor: Chikusa, Takashi c/o Hitachi Ltd., I. P. Group,, Tokyo 100-8220 (JP); Isobe, Nagomu c/o Hitachi Ltd., I. P. Group, Tokyo 100-8220 (JP); Nakama, Hironori c/o Hitachi Ltd., I. P. Group, Tokyo 100-8220 (JP); Yukawa, Masashi c/o Hitachi Ltd., I. P. Group, Tokyo 100-8220 (JP)
(74) Representative: Hodsdon, Stephen James

(56) References cited:
- WO-A-03/104971
- US-A1- 2001 049 773
- US-A1- 2003 033 383
- PATENT ABSTRACTS OF JAPAN vol. 2000, no. 15, 6 April 2001 (2001-04-06) & JP 2000 353125 A (NEC SOFTWARE SHIKOKU LTD), 19 December 2000 (2000-12-19)

## Description

The present application claims priority from Japanese Patent Application No. JP 2005-65717 filed on March 9, 2005.

The present invention relates to a storage network system and more particularly but not exclusively to a technology which is effective for application to a network system having a Frame relay device between an upper level apparatus (e.g. host machine) and a storage device.

In a storage network system (e.g. a Storage Area Network (SAN) or a storage network adopting Internet Protocol (IP)) which can be connected to plurality of host machines, improvement of access response to the plural host machines is required with rapid expansion of the storage network today. In most cases, the connection style of the above-described system is of "client to server system" type. And the storage apparatus is usually operated with many read requests more than write requests, like a Web Server system.

On the other hand, to meet such demand for high loads, the storage apparatus contains a high speed cache memory but the cache memory capacity is limited. Further, because of increase of apparatus cost, generally, the cache memory capacity is not so large except for some high-end apparatuses. Due to rapid increase of disk capacity and high-density mounting on the storage device, which are another factor, cache hit rate drops due to a drop in the ratio between the cache memory capacity and disk capacity and consequently, deterioration of response is feared.

Such an expansion of the network represented by the SAN generates an increase in the numbers of host machines capable of accessing the storage system. Because each of the respective host machines accesses to the storage apparatus for requiring a different data (files), it is impossible to store all of those files in the cache memory and the low cache hit rate causes slowdowns of response.

Further, even if the storage device includes a large capacity cache memory, the data transmission band of its interface is limited. Thus, to improve the band performance, the storage device needs to include a plurality of interface ports and combine with load distribution (load balance) control or the like, which is a large burden in cost field.

Thus, as described in patent document 1 (Japanese Patent Application Laid-Open Publication No. 11-112541), there is such a method that a Frame relay device having a cache memory is realized and data is cached depending on decision of the Frame relay device itself. Further, as described in patent document 2 (Japanese Patent Application Laid-Open publication No. 2000-353125), there is available technology concerning unified control on cache memories disposed dispersedly on respective hierarchized control units.

According to the technology described in the patent document 1, the Frame relay device itself monitors a packet or the like and cache it. Thus, if there exist Frame relay devices of the same type on the same route, it comes that each relay device caches a plurality of same data in the cache memory of them. Therefore, the efficiency is poor in the above case. Further, it can be considered that only partial data that a host machine requires is cashed on the Frame relay device in some cases. If nothing but part of data demanded form the host machine is cached, the Frame relay device needs to operate such a complicated process as converting commands issued form the host machine to commands for storage apparatus for the purpose to send remaining data of the partial data, and then an excessively large-scale hardware is needed for such a complicated processing.

Thus, the present invention preferably addresses the above-mentioned problem. A first object of the present invention is to provide technology relating to make simple the hardware (circuit scale) of the Frame relay device and that process to be simple on a storage network system which is constructed by the Frame relay devices, the host machines and the storage apparatus.

According to the technology described in the patent document 2, its purpose is to improve the cache hit rate by increasing the cache memory capacity with I/O cache memory of an I/O control unit which is a memory resource existing inside the storage apparatus, controller cache memory of the storage controller, and device cache memory of the storage device. However it is not considered about reduction of the data transmission band.

In other words, storage apparatus discussed in document 2 is equivalent to the conventional storage apparatus in which the respective cache memory capacities are summed up, in the situation where their performances are compared in terms of the maximum effect without considering the overhead and the transmission band limit of each I/F bus. Thus, because the storage apparatus discussed in document 2 is more excellent only in terms of cost, it is difficult to meet demands, in the conventional for quickly responding when many accesses from plural host machines concentrated, which the present invention handles, like the conventional unit.

If comparing further in realistic way, these technology discussed in document 2 shares an interface with the I/O control unit and device except the controller cache memory to access a memory. Thus, the transmission band of each interface bus is consumed by memory and I/O access. If the occupation ratio of the interface bus increases, it becomes difficult to perform multiplexing and parallel execution of commands and then causes low performance. That because data transmission exceeding the transmission band of the interface bus is impossible. Thus, a bottle neck in the performance is likely to occur. To avoid these disadvantages, it is necessary to add interface buses or improve the band. In such a situation, it cannot be said that it is always more excellent than the conventional apparatus in terms of cost.

Accordingly, the present invention preferably addresses the above-mentioned problem. A second object of the invention is to provide technology which enables improvement of response to a demand from the host machine without consuming the data transmission band by avoiding an event that the storage apparatus itself turns to a bottle neck in the system performance.

US 2001/049773A discloses a network which includes one or more server(s), switching fabric(s), and storage devices and provides for using a plurality of cache devices connected to the switching fabric. Data cached in the cache devices is available to the server(s) . The cache devices may be interconnected by a cache fabric, and at least one of the cache devices may be simultaneously connected to the switching fabric. Further, the cache fabric and the switching fabric may operate by sharing common control and management. In some cases, the cache fabric and that switching fabric are merged into a single fabric.

Of the invention disclosed in this patent application, typical aspects thereof are as follows.

A first aspect of the present invention provides a storage network system comprising: a storage apparatus having a storage device for storing data therein and a storage controller unit for controlling data write and data read to the storage device; and a Frame relay device for relaying data write request and data read request from a upper level apparatus to the storage apparatus, wherein the Frame relay device contains a cache memory for storing read data transmitted from the storage apparatus, **characterized in that:** before sending data to the Frame relay device, the storage apparatus is arranged to carry out processing of issuing a command for storing the data in the cache memory of the Frame relay device when receiving data read request from the upper level apparatus, and processing of issuing a command to the Frame relay device to send the data to the specified upper level apparatus if any specified upper level apparatus issues a read request for the same data again, and the Frame relay device is arranged to carry out processing of sending the data stored in its own cache memory to the specified upper level apparatus.

Further aspects of the present invention may have one or more of the following additional features:
(2) The Frame relay device contains a battery for supplying voltage at the time of power failure.
(3) The Frame relay device carries out processing of storing part of the data when it caches the data. Then, the storage apparatus issues a command to the Frame relay device for transmitting part of the data, and read the remaining data in the storage device while the Frame relay device is transmitting part of the data to a specified host machine, and send that read data.
(4) The Frame relay devices are provided in plural numbers and the respective Frame relay devices are disposed between the storage apparatus and the host machine on plural routes.
(5) The storage apparatus includes a means for selecting the Frame relay device and a table for controlling position information of the Frame relay device in order to issue a command to the Frame relay device.
(6) Each of the respective Frame relay devices on plural routes executes processing of storing different data.
(7) Processing of storing specified same data in plural Frame relay devices on the same route within the plural routes is carried out.
(8) A first Frame relay device specified by a specification of the storage controller sends data to a second Frame relay device. The second Frame relay device verifies data.
(9) Each Frame relay device carries out processing of destroying cached data in any case where no transmission request is made for specific data over a predetermined time, where the entry of storage apparatus is deleted from a route table, where the remaining capacity in the cache memory is smaller than data requested to be cached, or abnormality is detected at the time of data verification.
(10) Each Frame relay device carries out processing of destroying the cached data according to a command of the storage apparatus.
(11) Each Frame relay device assigns a cache area of a specified volume to each of the storage controller preliminarily. The storage controller grasps a capacity assigned to itself by inquiry and controls each Frame relay device not to execute cache request over the assigned capacity.
(12) Each Frame relay device, when a change over a specified level occurs in an area in which the cache area is capable of being assigned by deleting the cached data, carried out processing of sending a message to the storage controller.
   The storage controller carries out processing of grasping a capacity assigned to itself by inquiry in accordance with receipt of the message.
(13) The storage apparatus selects a first port for each Frame relay device and if data transmission load to the first port is over a specified volume, the storage apparatus sets permission for assignment of data to the second port corresponding to the first port.
(14) Each Frame relay device automatically controls to output a part of the data to the second port corresponding to the first port when the data transmission load to the first port is over a threshold set by the storage apparatus.
(15) Of the plural Frame relay devices, a third Frame relay device controls different interfaces of two or more kinds by independent switch functions. The cache memory provided on the third Frame relay device is accessible from each of the different interfaces.
(16) The third Frame relay device is disposed on the back end side of the storage apparatus and connected to a device in the storage apparatus.
(17) The third Frame relay device transfers two or more duplicated data to plural devices specified by a specification of the storage controller.
(18) The third Frame relay devices are provided in plural numbers. Of the plural third Frame relay devices, one Frame relay device specified by a specification of the storage controller sends data to redundant Frame relay device of other system. The Frame relay device of the other system verifies data.
(19) The third Frame relay devices are provided in plural numbers. Of the plural third Frame relay devices, a fourth Frame relay device has a protocol converting unit for converting between different interfaces of two or more kinds. And the fourth Frame relay device executes mutual data exchange between the different interfaces mutually.
(20) The protocol converting unit converts an ordered set with control code in transmission/receiving. The control code after conversion is transmitted as data having a different identifier.

The effects attained by the typical aspects of the invention disclosed by this application are as follows.

According to aspects of the present invention, by simplifying the processing of the Frame relay device in the storage network system having Frame relay devices provided between the host machines and storage apparatus, the hardware (circuit scale) of the Frame relay device can be constructed relatively simply.

Further according to aspects of the present invention, by avoiding such an event that the storage apparatus itself turns to a bottle neck in the system performance, the response to a request from the host machine can be improved without consuming the data transmission band.

### BRIEF DESCRIPTIONS OF THE DRAWINGS

FIG. 1 is a diagram showing a model of the storage network system according to the first embodiment of the present invention;
FIG. 2 is a diagram showing the appearance (front view and rear view) of a stand-alone type Frame relay device in the storage network system according to an embodiment of the present invention;
FIG. 3 is a diagram showing functional blocks of the storage network system according to the embodiment of the present invention;
FIG. 4 is a diagram showing the structure of a root table example in a storage device in the storage network system according to the embodiment of the present invention;
FIG. 5 is a diagram showing the structure of a root table example in the storage device in the storage network system according to the embodiment of the present invention;
FIG. 6 is a diagram showing the structure of an external cache table example in the storage device in the storage network system according to the embodiment of the present invention;
FIG. 7 is a diagram showing the structure of a cache control table example in a Frame relay device in the storage network system according to the embodiment of the present invention;
FIG. 8 is a diagram showing a flow of processing in case where the Frame relay device is made to cache and in case where the Frame relay device is made to transmit the cached data in the storage network system according to the embodiment of the present invention;
FIG. 9 is a diagram showing a flow of processing in case where the Frame relay device is made to cache and in case where the Frame relay device is made to transmit the cached data in the storage network system according to the embodiment of the present invention, continued from FIG. 8;
FIG. 10 is a diagram showing a flow of the processing in case where the Frame relay device is made to abolish the cached data (at the times of data updating and storage apparatus initialized) in the storage network system according to the embodiment of the present invention;
FIG. 11 is a diagram showing the flow of processing in case where the Frame relay device is made to compare the cached data in the storage network system according to the embodiment of the present invention;
FIG. 12 is a diagram showing the flow of processing in case where the Frame relay device is made to compare the cached data in the storage network system according to the embodiment of the present invention, continued from FIG. 11;
FIG. 13 is a diagram showing a model of the storage network system according to a first application example of the embodiment of the present invention;
FIG. 14 is a diagram showing the flow of processing in case for realizing automatic load balance control in the storage network system according to the first application example of the embodiment of the present invention;
FIG. 15 is a diagram showing the appearance of mounting onto blade type system in the storage network system according to a second application example of the embodiment of the present invention;
FIG. 16 is a diagram showing the functional blocks of the storage network system according to the second application example of the embodiment of the present invention;
FIG. 17 is a diagram showing the internal block (example of single-CPU configuration) of a back-end type Frame relay device in the storage network system according to the second application example of the embodiment of the present invention;
FIG. 18 is a diagram showing the internal block (example of double-CPU configuration) of a back-end type Frame relay device in the storage network system according to the second application example of the embodiment of the present invention;
FIG. 19 is a diagram showing the flow of processing at the time of data write of the storage device to a disk in the storage network system according to the second application example of the embodiment of the present invention;
FIG. 20 is a diagram showing the flow of the processing at the time of data write of the storage device to a disk in the storage network system according to the second application example of the embodiment of the present invention, continued from FIG. 19;
FIG. 21 is a diagram showing the flow of processing at the time of data read of the storage device from a disk in the storage network system according to the second application example of the embodiment of the present invention;
FIG. 22 is a diagram showing the flow of processing at the time of data read of the storage device from a disk in the storage network system according to the second application example of the embodiment of the present invention, continued from FIG. 21;
FIG. 23 is a diagram showing the functional blocks of the storage network system according to a third application example of the embodiment of the present invention;
FIG. 24 is a diagram showing mechanism for FC-LAN conversion in the storage network system according to the third application example of the embodiment of the present invention; and
FIG. 25 is a diagram showing the flow of the processing of the FC-LAN conversion in the storage network system according to the third application example of the embodiment of the present invention.

### <Concept of the present invention>

The storage network system of aspects of the present invention possesses a Frame relay device between a host machine and a storage apparatus. The Frame relay device contains a cache memory. When receiving a data read request from the host machine, the storage apparatus sends the data with a command for storing that data in a cache memory of the Frame relay device. If the host machines issues an access request for the same data again, the storage apparatus transmits to the Frame relay device a command for sending the data to a specified host machine. Then, the Frame relay device sends data cached by its own cache memory to the host machine.
Consequently, speed-up of response to data read request from the host machine may be achieved. Further, because the Frame relay device only executes a specific response based on a command from the storage apparatus side, its hardware (circuit scale) can be formed in a relatively simple structure.

In the processes, as for large data, the Frame relay device caches, for example, part of the large data from the top. While the Frame relay device is sending the data to the host machine, the storage apparatus accesses remaining data in the storage device such as an incorporated hard disk drive (HDD). Consequently, the overhead may be reduced.

Plural Frame relay devices may be disposed with respect to plural host machines on plural routes. The storage apparatus makes the respective Frame relay devices store different data.
Consequently, the cache memory capacity can be increased easily.

The method of aspects of the present invention can be widely applied to a network Frame relay device of a network switch, rooter in network attached storage (NAS), a fiber channel switch in the storage area network (SAN), an expander of serial attached SCSI (SAS) and the like.

For example, if it is designed that the cache function can be utilized through such a frame converting unit as fiber channel to SAN (FC-SAN), internet protocol to SAN (IP-SAN) and the like, an objective network coverage area can be expanded further. For example, an application like near line storages such as SAS can be connected through wide area network (WAN).

The aspects of the present invention can be applied to a switch unit which is disposed between a storage controller unit in the storage apparatus and the case of a storage device such as HDD. In this case,
not only this is incorporated but also it is possible to constitute a switch under a blade server such as NAS header.

Further, aspects of the present invention can be applied to automatic load balance control by recognizing a Frame relay device and port based on a bridge ID or the like without necessity of support by host program or the like.

Hereinafter, the embodiments and application examples of the present invention will be described in detail with reference to the accompanying drawings. In the meantime, same reference numerals are attached to the same components in all drawings for explaining the embodiments and application examples, however repeated description thereof is omitted.

### <Embodiment>

### [Model of storage network system]

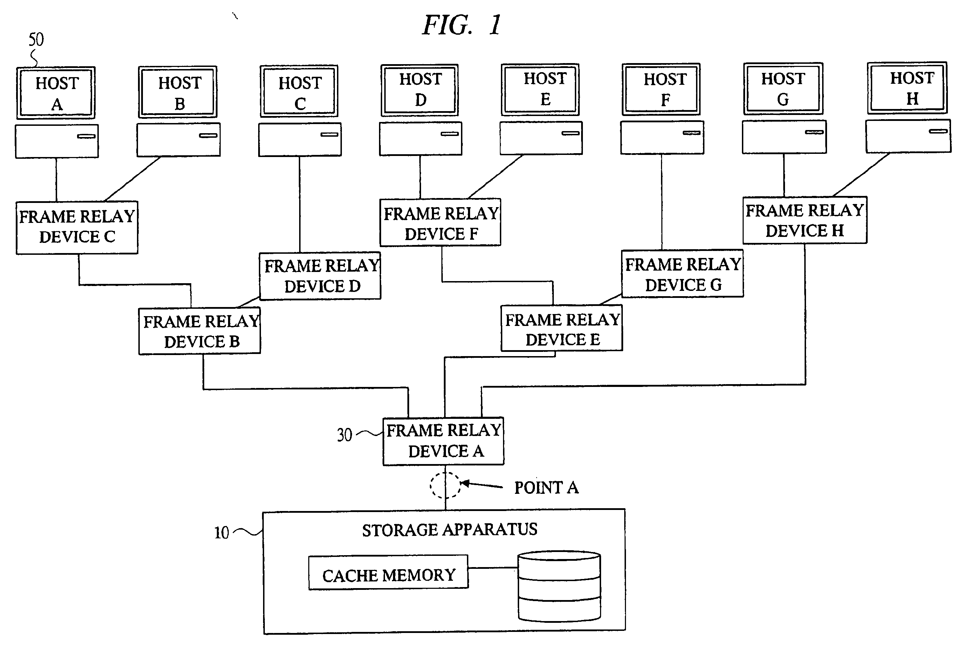

An example of the model of the storage network system according to an embodiment of the present invention will be described with reference to FIG. 1. Fig. 1 shows a model of the storage network system.

The model of the storage network system of this embodiment comprises a storage apparatus 10 composed of a disk array or the like, eight Frame relay devices A-H (30) which relay data write and read request from the host machine to this storage apparatus 10 and eight host machines A-H (50) connected to this Frame relay device 30.

If the technology of the patent document 1 described previously is applied to the model of the storage network system, following occurs. For example, if a host machine A reads data from the storage apparatus 10 in conditions in which nothing is cached in the Frame relay device 30, Frame relay devices located on a route relay the read data to the host machine A and at the same time, caches to themselves. As a result, it comes that the Frame relay devices A, B, C store the same data. This means that the cache memory of the Frame relay device 30 cannot be used efficiently.

Further, it comes that the Frame relay device C responds to a read request for the same data from the host machine A on the cache memory of the Frame relay device C. At this time, if a host machine D having a route not through the Frame relay device C has updated that data, the Frame relay device C cannot sense the update. Thus, it comes that the Frame relay device C responds with old data through its own cache memory and there exists a case where no proper data can be obtained.

According to this embodiment, although described in detail later, the Frame relay device 30 caches only read data of the host machine 50 according to a command of the storage apparatus 10. By providing the Frame relay device 30 with this cache memory, data flowing at a point A is only data at the time of cache mishit. By controlling the cache state of each Frame relay device 30 by the storage apparatus 10 side, a system ensuring an improved memory usage efficiency can be built up. The Frame rely device 30 does not cache any write data from the host machine 50. This is because data lost on the route should be prevented. Generally, in accessing to the storage apparatus 10, data read cases are larger than data write cases (write: read = about 1:5). In case of Web data and the like, it is not rare that 90% or more requests are for read. From those viewpoints, the response performance can be improved by caching only read data.

### [Appearance of Frame relay device]

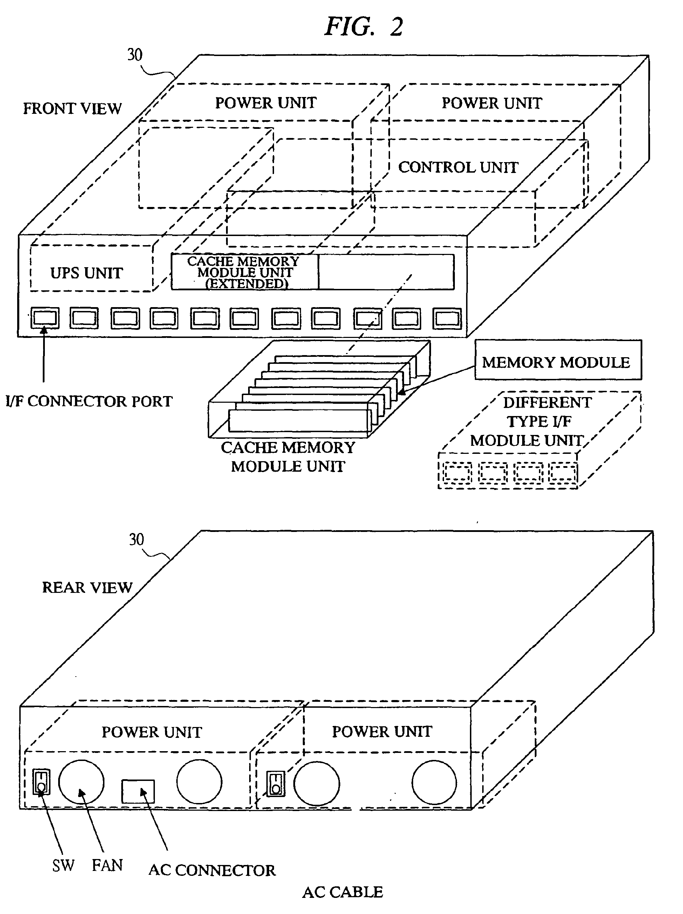

An example of the stand-alone type Frame relay device in the storage network system of this embodiment will be described with reference to FIG. 2. FIG. 2 shows the appearance (front view and rear view) of the stand-alone type Frame relay device.

The Frame relay device 30 is of, for example, stand-alone type and comprises a power unit composed of AC/DC power supply, uninterruptible power supply (UPS) composed of battery, a control unit composed of CPU, data controller, memory, and director, cache memory module unit composed of cache memory and the like and is received in a module unit. Under this structure, dual power units are received so as to constitute of duplex.

The cache memory module units can be installed additionally, if needed. This cache memory module unit receives plural memory modules. This cache memory module unit is connected with a connector such as peripheral component interconnect (PCI) -express or the like, which is preferred to be removable. Further, the cache memory module unit can be replaced with an I/F unit which is a different type unit.

An I/F connector port connected to the director is provided on a front face of this Frame relay device 30. A power unit switch, a fan and an AC connector to which an AC cable is to be connected are provided on a rear face of the Frame relay device 30.

### [Configuration of storage network system]

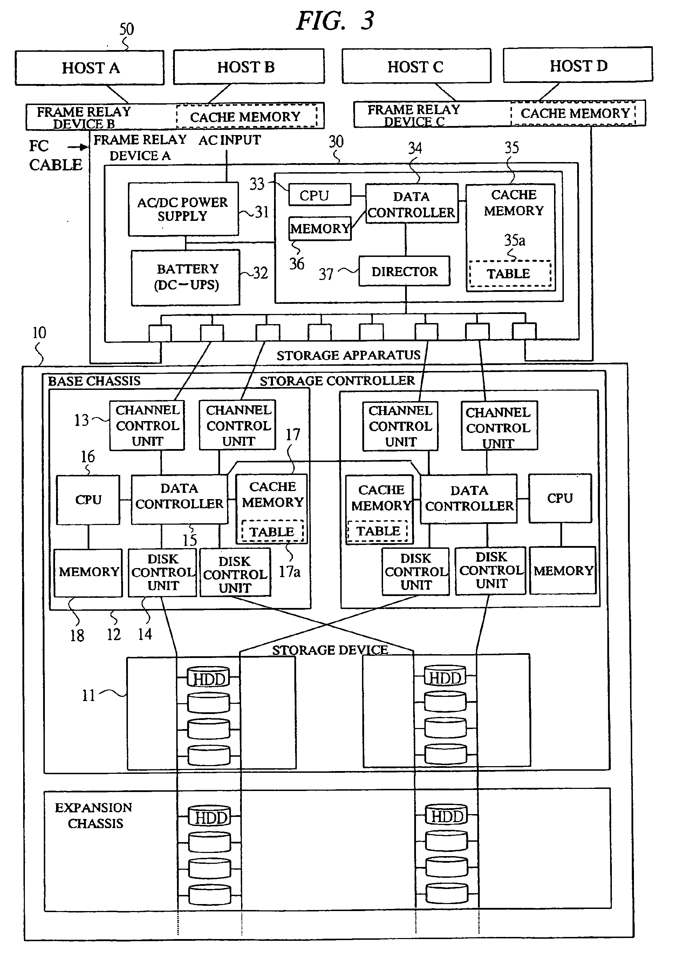

An example of the storage network system of this embodiment will be described with reference to FIG. 3. FIG. 3 shows the functional blocks of the storage network system.

The storage network system shown in FIG. 3 indicates a type which is provided by downsizing of the model in FIG. 1. The storage network system comprises a storage apparatus 10 composed of a disk array device and the like, three Frame relay devices 30 for relaying data write/read request from the host machine to this storage apparatus 10 and four host machines 50 constituted of information processing units and the like connected to this Frame relay device 30. In this example, the Frame relay device 30 is constructed of two repeaters and the storage apparatus 10 is connected to a first repeater Frame relay device A. This first stage Frame relay device A is connected to Frame relay devices B, C of second stages. The Frame relay devices B, C of the second repeater are connected to the respective host machines A, B, C, D.

The storage apparatus 10 comprises a storage device 11 for storing data such as HDD, and a storage controller unit 12 for controlling data write/read with respect to this storage device 11. In this example, an expansion chassis is provided as well as a base chassis so that the memory capacity of the storage device 11 is increased.

The storage controller unit 12 comprises a channel control unit 13 which receives data input/output request from the host machine 50, a disk control unit 14 for controlling data write/read with respect to the storage device 11, a data controller 15 for controlling data transmission between the channel control unit 13 and the disk control unit 14, a CPU 16 for controlling the storage controller unit 12, a cache memory 17 in which data exchanged between the channel control unit 13 and the disk control unit 14 is stored temporarily, a memory 18 for storing control information and the like. Particularly, the cache memory 17 is provided with various kinds of tables 17a such as a route table, an external cache table and the like, although their details will be described later.

The Frame relay device 30 comprises an AC/DC power supply 31 for converting an AC power to DC power, a battery 32 for use when supply of the AC power is failed, a CPU 33 for controlling the Frame relay device 30, a data controller 34 for controlling data transmission, a cache memory 35 for storing data exchanged between the host machine 30 and the storage apparatus 10 temporarily, a memory 36 for storing control information, a director 37 composed of an I/F and the like. Particularly, although described later, the cache memory 35 is provided with various kinds of tables 35a such as the route table, the cache control table and the like.

### [Route table and external cache table in the storage apparatus and creation methods thereof]

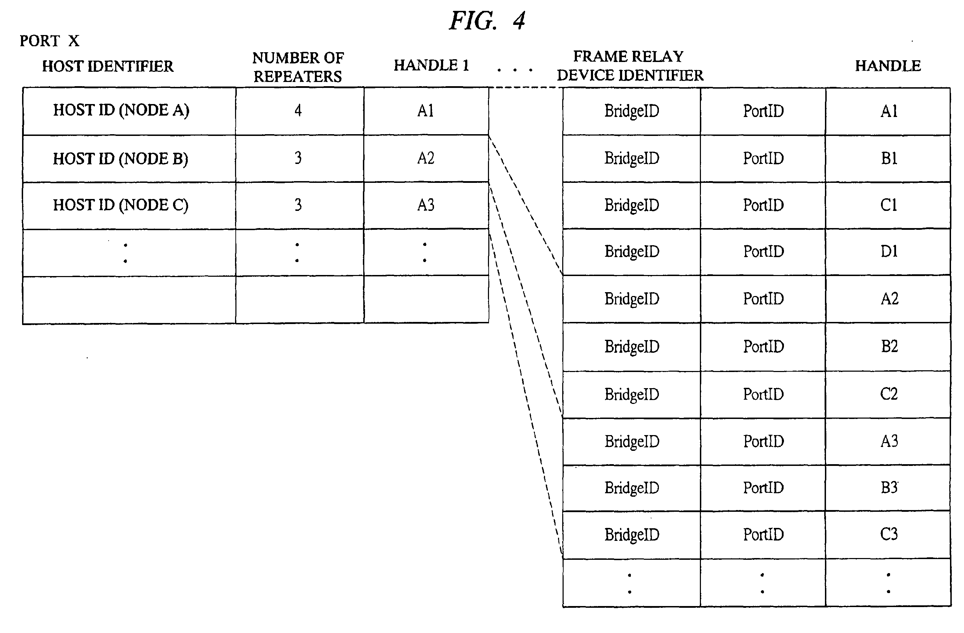

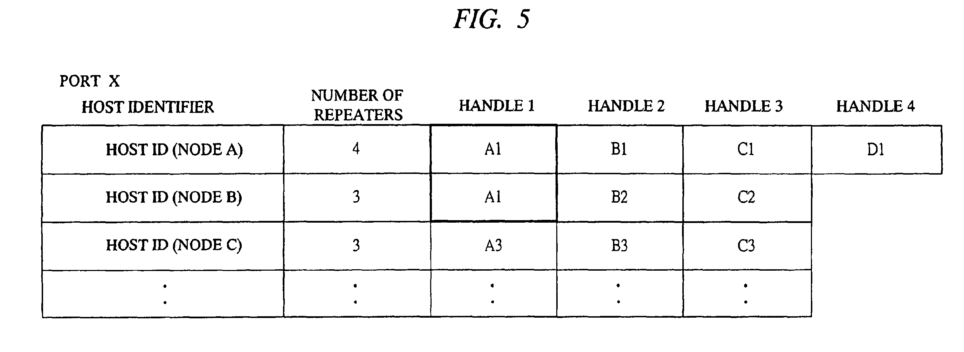

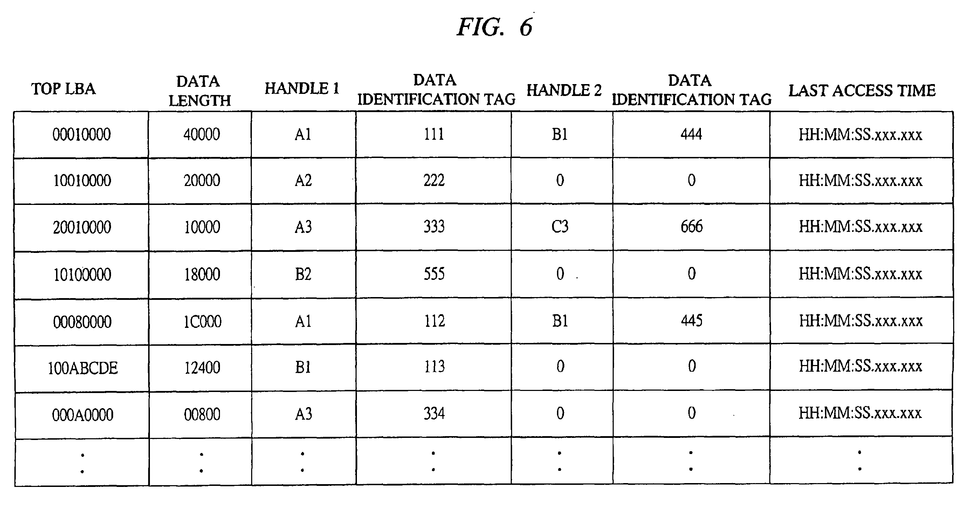

Examples of the route table and external cache table in the storage apparatus will be described with reference to FIGS. 4-6. FIG. 4 shows the configuration of the route table, FIG. 5 shows the configuration of a route table (application example) and FIG. 6 shows the configuration of the external cache table.

### (1) Route table

As shown in FIG. 4, the route table has respective areas for storing a host identifier, number of Frame relay device stages, handles and the like as information of the host machine 50 for each port of the storage apparatus 10. The respective route table also has respective areas for storing Frame relay device identifier, handle and the like as information of the Frame relay device 30. A route from each port of the storage apparatus 10 to the host machine 50 through the Frame relay device 30 is controlled according to this route table.

If plural host machines 50 exist on the same route, they may be controlled altogether as a node group. In this case, as shown in FIG. 5, the host identifier, number of Frame relay device stages, handle 1, handle 2, handle 3 and handle 4 are stored in the route table. This example indicates that in both node A and node B, "A1" in the handle 1 are of the same segment.

### (2) External cache table

As shown in FIG. 6, the external cache table has respective areas for storing top LBA, data length, handle 1, data identification tag, handle 2, data identification tag, last access time and the like. In this example, data whose top LBA is 00010000 and data length is 40000 is cached in the Frame relay devices 30 of A1 and B1. Further, data whose top LBA is 100ABCDE and data length is 12400 is cached only in the Frame relay device 30 of B1.

### (3) Creation method of table

First, when linkage between each port of the storage apparatus 10 and the Frame relay device 30 is established, the storage apparatus 10 recognizes the Frame relay device 30 which is connected directly to each port. Next, when the host machine 50 of the node A is initialized, the storage device 11 is scanned with inquiry command or the like.

Further, when the storage apparatus 10 receives an initial command from the host machine 50, the storage apparatus 10 responds to that command and makes an upper level Frame relay device 30 report a Frame relay device identifier (bridge ID, port ID) to the node. Then, the storage apparatus 10 stores the identifiers reported by each Frame relay device 30 in its table and assigns an arbitrary handle to each identifier. At this time, by assigning the handles in ascending order from a side near the storage apparatus 10 for each node, they are controlled as well as the position of the Frame relay device 30.

In the meantime, a load balance control method by expansion of this function will be described with an application example 1 described later. Further, the assignment about which Frame relay device 30 is made to cache data in order to reduce data volume of a Frame relay device having a slow transmission speed using information about communication (link) cost controlled by the Frame relay device 30 can be easily changed.

### [Route table and cache control table in Frame relay device and cache relating operation]

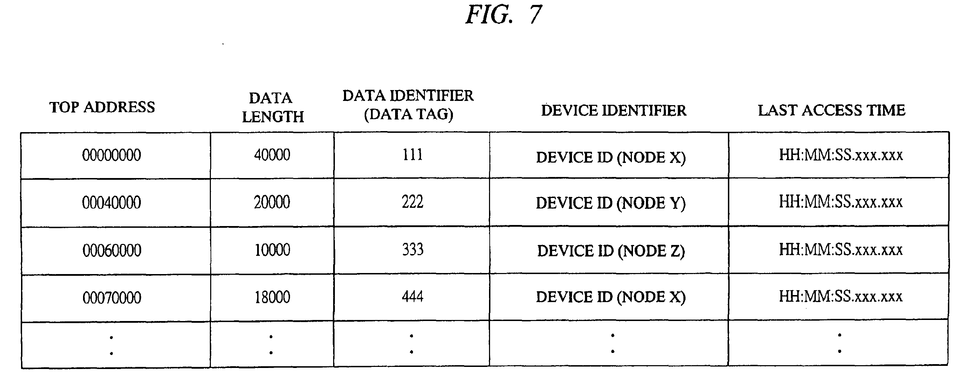

An example of the cache control table in the Frame relay device will be described with reference to FIG. 7. FIG. 7 shows the configuration of the cache control table.

### (1) Route table

Each Frame relay device 30 executes discovery process of selecting network path of each segment used first with spanning tree algorithm (STA). In case of LAN switch, this information is shared by every switch using a special network frame called bridge protocol data unit (BPDU). Each switch holds a BPDU table and updates it continuously.

### (2) Cache control table

As shown in FIG. 7, the cache control table has respective areas for storing top address, data length, data identifier (data, tag), device identifier and last access time and the like.

### (3) Destroying of data cached in Frame relay device

The Frame relay device 30 executes destroying (deletion) of the cached data in following cases (a) to (c).
(a) Data which is not requested to be transferred longer than a specific time (only a corresponding data, however if there is a remaining capacity in the cache memory, this does not always need to be executed.)
(b) When the storage apparatus becomes non-responsive due to turned off a power or the like, then that entry is deleted from the route table. (All data in the corresponding storage apparatus are deleted.)
(c) If the remaining capacity of cache memory is smaller than data requested to be cached, then deleting data (or plural data) having low access frequency by the storage controller unit or if cache memory capacity is assigned to a storage corresponding to the access frequency, data having low access frequency (or plural data) are deleted without limiting any storage controller unit.

Consequently, an operation for increasing the cache hit efficiency is carried out.

### (4) Report of cache memory capacity which can be assigned to a storage controller unit and sending of capacity confirmation request message

In the case where plural storage controller units 12 are connected under the Frame relay device 30, if the cached data on other storage controller unit is constantly destroyed in accordance with a new cache request, the overhead increases and the response may slow down.

Then, it is possible to provide each unit of the storage controller unit 12 with a function to preliminarily enables assigning a cache area of a specific capacity. The storage controller unit 12 grasps a capacity to be assigned to itself by inquiry and controls not to make cache request more than necessary to the Frame relay device 30 in order to optimize algorithm.

If there are not so many subject storage controller units 12 or there is generated a capacity in the assignment area due to a released area by power OFF or the like, a confirmation request about the assigned capacity is sent from the Frame relay device 30 to the storage controller unit 12. Then, the storage controller unit 12 inquires with the Frame relay device 30 about a capacity capable of being assigned to readjust cache control algorithm on the side of the storage controller unit 12.

When a new storage controller unit 12 is initialized, cache memory capacity is newly assigned thereto. If there generated necessity to reduce the capacity of the storage controller unit 12 that had been already connected, the confirmation request for the assigned capacity is also sent from the Frame relay device 30 to the storage controller 12. Then, the storage controller unit 12 inquires again and at the same time, identification tag of the cached data that is deleted accompanied by releasing of the area and the like are reported following a request from the storage controller unit 12.

According to this function, the storage controller unit 12 determines whether or not the Frame relay device 30 is equipped with this function. Additionally, it is possible to verify whether or not there exists the function using switch management protocol (SMP) or the like.

### [Procedure of processing from the storage apparatus to the Frame relay device (linkage operation between the storage apparatus and the Frame relay device)]

### <1> Processing for making the Frame relay device cache

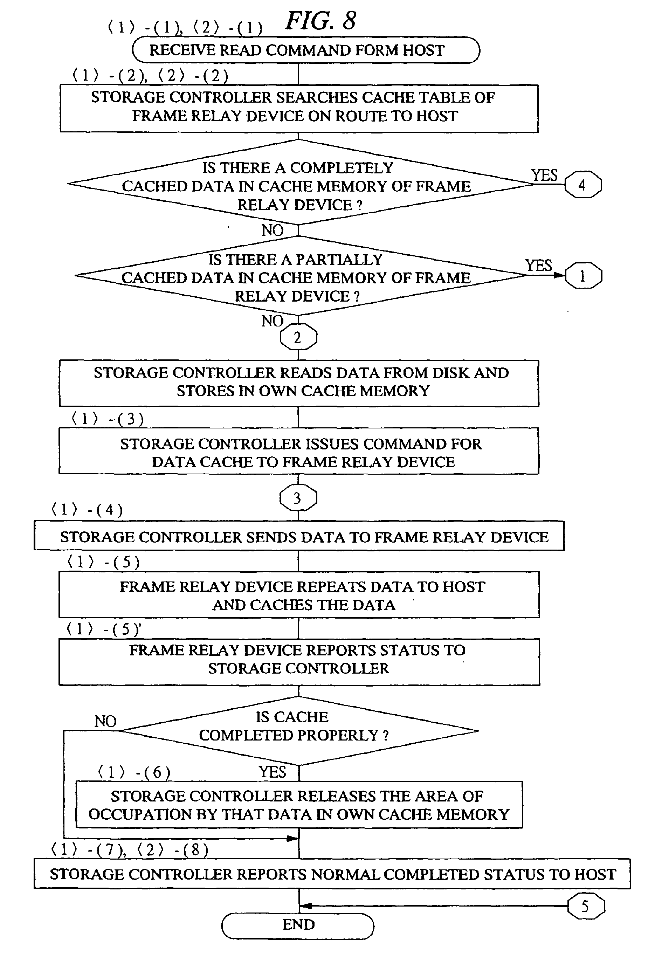

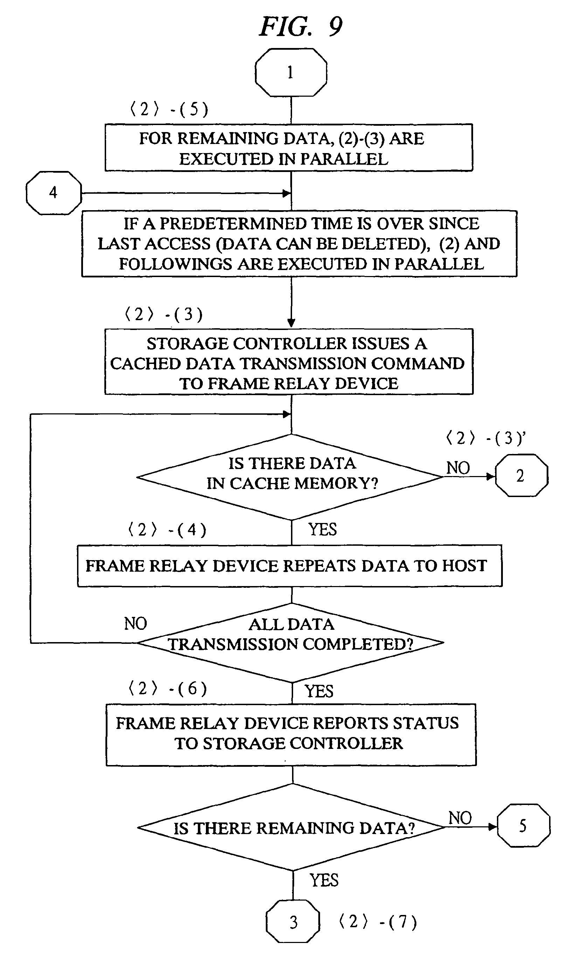

An example of processing for making the Frame relay device cache will be described with reference to FIGS. 8 and 9. FIGS. 8 and 9 show a flow of this processing. FIGS. 8 and 9 show a processing for transmitting data cached in the <2> Frame relay device described later to the host machine.

This processing is carried out as the operations of the storage apparatus 10 (storage controller unit 12) and the Frame relay device 30 at the time of data read from the host machine 50.
(1) The storage controller unit 12 receives a read command based on a read request from the host machine 50.
(2) The storage controller unit 12 searches a cache table in the Frame relay device 30 on a route of the host machine 50 in order to recognize the route of the host machine 50.
(3) The storage controller unit 12 issues a cache command (data tag, memory byte count and the like) to the Frame relay device 30 on the route of a target host machine 50 in order to cache subsequent data prior to data transmission. At this time, the command transmission to the Frame relay device 30 is carried out by specifying an ID of the Frame relay device 30. Further, for example, the data transmission is carried out with fiber channel or the like and it is possible to employ a method for sending or receiving a command with other I/F, for example, LAN. In case of large data, its own access response time is covered by a command for making the Frame relay device 30 cache part of that data.
(4) The storage controller unit 12 transmits data to the Frame relay device 30.
(5) The Frame relay device 30 transmits data to the host machine 50 and caches specified data associated with a tag. A frame header at this time and the like are stored partially as a model for reuse. At this time, corresponding to a cache request from the storage controller unit 12, the Frame relay device 30 reports a status to the storage controller unit 12. If the cache process is successful, identification tag created by the Frame relay device 30 as well as data tag from the storage controller unit 12 are reported to the storage controller unit 12.
   In the meantime, if the cache process is not successful, there are two modes (a), (b) as follows (may occurs at other time than a failure).
   (a) A status of cache failure is sent back. This includes a case where nothing but data smaller than a byte count requested by the storage controller unit 12 could be stored as well as includes a case where nothing could be stored. If partial memory succeeds, information containing byte quantity stored by the Frame relay device 30 is reported at the same time. At this time, the byte count to be stored is preferred to be integral multiple of the block length handled by the storage controller unit 12 in case of the block type SAN storage. Further in case of the file type NAS, it is preferred to be in the unit of byte or integral multiple of the data length excluding the header of the IP frame, which is an effective method. (b) Old data corresponding to an ID of the storage controller unit 12 is cleared to cache new data and the identification tag of the new data and the deleted identification tag (or plural tags) of the old data are reported. The storage controller unit 12 deletes the corresponding entry from an internal table (deletes a cache log) in order to indicate that the corresponding data is not cached based on information of the tag deleted from the cache memory 35 by the Frame relay device 30.
(6) If the cache request to the Frame relay device 30 is completed normally, the storage controller unit 12 destroys the data requested for the Frame relay device 30 to cache from the cache memory 17 of the storage controller unit 12 to release the data area and then, stores only cache log (data identification tag, data length and the like).
(7) The storage controller unit 12 reports a normal end status to the host machine 50.

Consequently, the processing for caching in the Frame relay device 30 is completed.

### <2> Processing in case for transmitting the data cached in the Frame relay device to the host machine

An example of the processing for making the Frame relay device transmit the cached data will be described with reference to FIGS. 8, 9. FIGS. 8, 9 show a flow of this processing.

This processing is executed as operations of the storage apparatus 10 (storage controller unit 12) and the Frame relay device 30 at the time of data read from the host machine 50.
(1) The storage controller unit 12 receives a read command based on a read request form the host machine 50.
(2) The storage controller unit 12 searches the cache table of the Frame relay device 30 on a route to the host machine 50 to recognize the route to the host machine 50.
(3) If a corresponding data exists on the cache memory 35 of the Frame relay device 30, the storage controller unit 12 issues a cache data transmission command (host address, data identification tag, transmission byte count and the like) to the Frame relay device 30. At this time, if a trouble occurs in the cache memory 35 of the Frame relay device 30, by responding to a data transmission instruction from the storage controller unit 12 saying that it is impossible to execute, the storage controller unit 12 executes the data transmission and it is possible to instruct the Frame relay device 30 to cache the corresponding data. Further, if that corresponding data is volatilized due to power OFF/ON of the Frame relay device 30, it is reported that it is impossible to execute. In this case, the storage controller unit 12 can instruct the Frame relay device 30 to cache the data sent by the storage controller unit 12 again.
(4) If data exists in the cache memory 35 of the Frame relay device 30, the Frame relay device 30 transmits that data to the host machine 50 (part of the header portion and the like is automatically generated).
(5) If data not existing in the cache memory 35 of the Frame relay device 30 is included, the storage controller unit 12 accesses remaining data ((2), (3) are executed at the same time).
(6) If transmission of all data in the Frame relay device 30 is completed, the Frame relay device 30 reports data transmission termination to the storage controller unit 12 or a status for announcing the termination in advance.
(7) If there exists remaining data, the storage controller unit 12 transmits the remaining data to the host machine 50 subsequent to data generated by the Frame relay device 30.
(8) The storage controller unit 12 reports normal end status to the host machine 50. Consequently, the processing of transmitting the data cached in the Frame relay device 30 to the host machine 50 is completed.

### <3> Processing for making the Frame relay device destroy cached data (at the time of data updating)

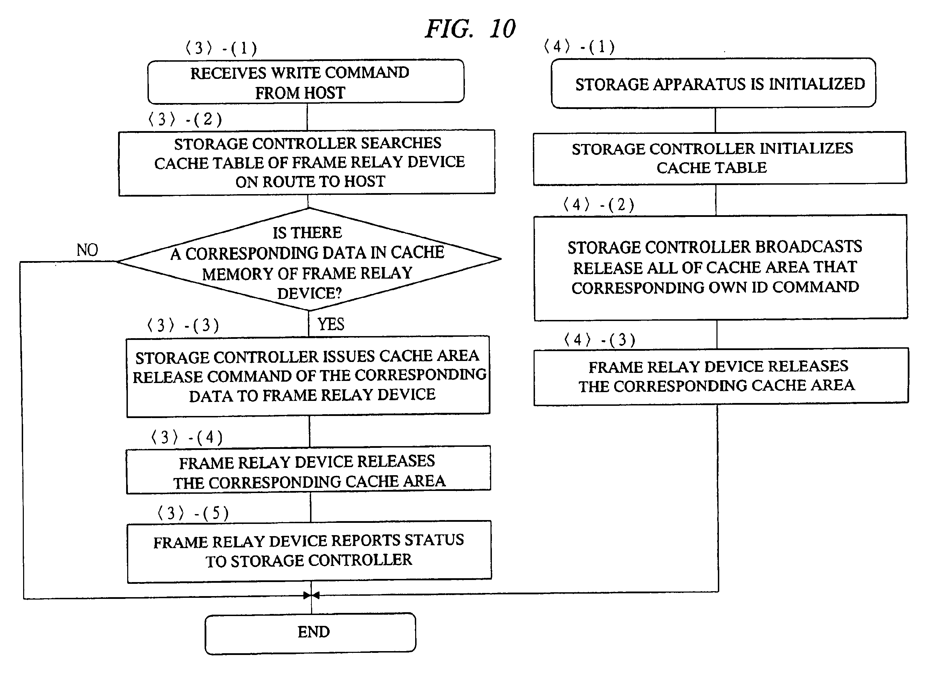

An example of the processing for destroying data cached by the Frame relay device (updating data) will be described with reference to FIG. 10. FIG. 10 shows a flow of this processing. FIG. 10 also indicates later described <4> Processing for destroying the data cached in the Frame relay device (at the time of storage apparatus initialized).

This processing is executed as operations of the storage device 10 (storage controller unit 12) and the Frame relay device 30 at the time of data write from the host machine 50.
(1) The storage controller unit 12 receives a write command due to a write request from the host machine 50.
(2) The storage controller unit 12 searches the cache table of the Frame relay device 30 on a route to the host machine 50 in order to recognize the route to the host machine 50.
(3) When old data of the corresponding data exists in the cache memory 35 of the Frame relay device 30, the storage controller unit 12 issues a cached area release command of the corresponding data issued to the Frame relay device 30 in order to instruct the Frame relay device 30 to destroy (delete) the cached data corresponding to the old data of the updated data.
(4) The Frame relay device 30 deletes the corresponding data in the cache memory 35 and release the cached area.
(5) The Frame relay device 30 reports a deletion completion status of the corresponding data to the storage controller unit 12. Consequently, the processing of case for destroying data cached in the Frame relay device 30 (at the time of updating data) is completed.

### <4> Processing for destroying the data cached in the Frame relay device (at the time of storage apparatus initialized)

An example of the processing for destroying data cached in the Frame relay device (at the time of storage apparatus initialized) will be described with reference to FIG. 10. FIG. 10 shows a flow of this processing.

This processing is executed as operations of the storage apparatus 10 (storage controller unit 12) and the Frame relay device 30 at the time of initialization of the storage apparatus.
(1) The storage apparatus 10 is initialized (including restart). At this time, the cache table is initialized.
(2) The storage controller unit 12 broadcasts its own ID information and all cached area release command in order to instruct all the Frame relay devices 30 to clear the cached area relating to itself.
(3) The Frame relay device 30 deletes the corresponding data in the cache memory 30 and releases the corresponding cached area. In this case, although it is not necessary to report the termination of the processing, the Frame relay device 30 may perform the end report of the process for the storage controller unit 12 to recognize the Frame relay device 30 on the route. Further, instead of broadcasting, the host machine 50 may transmit separately a command to the Frame relay device 30 on the route when host machine 50 recognizes the storage controller unit 12.

As a result, the processing in the case of destroying the data cached in the Frame relay device 30 (at the time of storage apparatus initialized) is completed.

### <5> Processing in case of instructing the Frame relay device to compare cached data

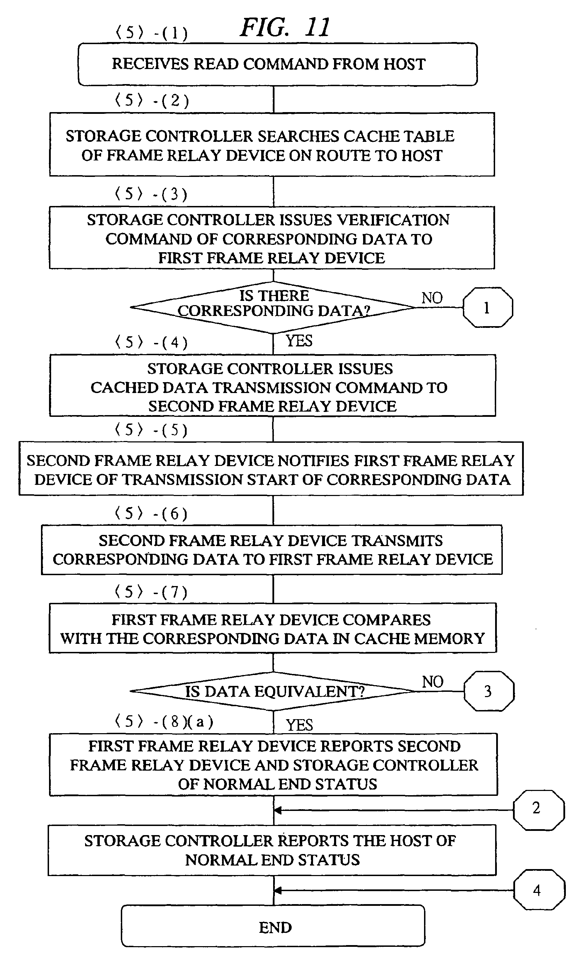

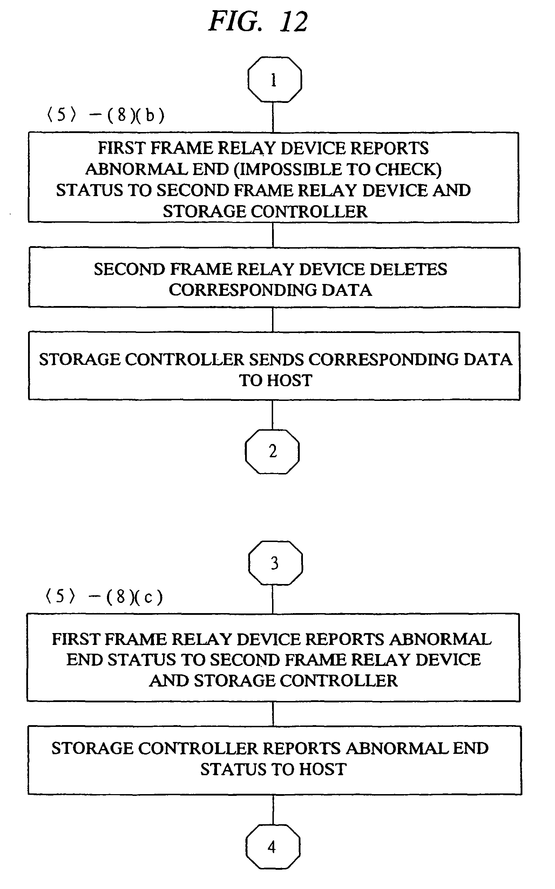

An example of the processing in case of instructing the Frame relay device to compare the cached data will be described with reference to FIGS. 11, 12. FIGS. 11, 12 show a flow of this processing.

When data read is executed from the host machine 50, if the same data is cached in the first Frame relay device (side near the host machine 50) and the second Frame relay device (side near the storage apparatus 10), this processing is executed as operations of the storage apparatus 10 (storage controller unit 12) and the first and second Frame relay devices 30.
(1) The storage controller unit 12 receives a read command based on a read request from the host machine 50.
(2) The storage controller unit 12 searches the cache table of the Frame relay device 30 on a route to the host machine 50 in order to recognize the route to the host machine 50.
(3) If a corresponding data exists in the cache memory 35 of the Frame relay device 30, the storage controller unit 12 issues a verification command for that corresponding data in order to instruct the first Frame relay device 30 (for check by comparing) about host address, data identification tag, transmission byte count, check destination Frame relay device ID and the like.
(4) If the corresponding data exists in the cache memory 35 of the Frame relay device 30, the storage controller unit 12 issues a cache data transmission command in order to instruct the second Frame relay device 30 (for data transmission) about host address, data identification tag, transmission byte count, check destination Frame relay device ID and the like.
(5) The second Frame relay device 30 that transmits data notifies the first Frame relay device 30 that checks data, prior to the data transmission, that transmission of the corresponding data is started.
(6) The second Frame relay device 30 transmits the corresponding data following the same procedure as subsequent to the above-described <2> (4).
(7) The first Frame relay device 30 relays the data to the host machine 50 and at the same time, compares with data in its own cache memory 35.
(8) Corresponding to a result of the check, the following operations (a), (b), (c) are carried out.
   (a) If the check is normal, the first Frame relay device 30 reports normal end status to the storage controller unit 12 and the second Frame relay device 30 from which the data is transmitted. Further, the storage controller unit 12 reports a normal end status to the host machine 50.
   (b) If the check is disabled, the first Frame relay device 30 reports abnormal end status due to disabled check to the storage controller unit 12 and the second Frame relay device 30 from which the data is transmitted. In this case, the Frame relay device 30 of the sending destination deletes the corresponding cached data without any data sending. Further, the storage controller unit 12 can instruct the Frame relay device (Frame relay devices) 30 on the route to cache the corresponding data as well as transmit data to the host machine 50.
   (c) If the check is abnormal, the first Frame relay device 30 reports the abnormal end status due to check abnormality to the storage controller unit 12 and the second Frame relay device 30 from which the data is transmitted. In this case, because transmission of data to the host machine 50 is completed, the storage controller unit 12 reports the abnormal end status to the host machine 50. Further, the Frame relay devices 30, which are sending destination and sender, delete the corresponding cached data. Corresponding to a re-execution request from the host machine 50, the storage controller unit 12 can instruct the Frame relay devices 30, which are sending destination and sender, to cache the corresponding data as well as transmit data.

In the above-described example, when the Frame relay device 30 reports check abnormality to the storage controller unit 12, the remaining data subsequent to the abnormal detection may be transferred to the storage controller unit 12 by reporting the data position and the like of a final frame which is checked normally to the storage controller unit 12.

Consequently, the processing in case of instructing the Frame relay device 30 to compare the cached data is completed.

### [Effect of this embodiment]

(1) In case of a cache hit, because nothing but a short frame for instruction/response to/from the Frame relay device 30 is transmitted or received between the storage apparatus 10 and the Frame relay device 30, band occupation rate can be reduced with respect to the case of data transmission. Further, because generally the transmission bandwidth of the Frame relay device 30 is wider than the transmission bandwidth of the storage apparatus 10, the same effect as improvement of the transmission performance of the storage apparatus 10 can be obtained. Further, because the Frame relay device 30 executes nothing but a specified response, the hardware (circuit scale) can be constructed relatively simply.
(2) According to this method, the response of the entire system to a read request from the host machine 50 can be improved without consuming data transmission band. Also by assigning the usage rate of the cache memory for read and write largely to write on the side of the storage apparatus 10, the performance of the write processing can be improved. Alternatively, the number of the memories provided in the storage apparatus 10 can be reduced and there is an advantage for contributing to reduction of cost.
(3) In an application having plural ports and for executing a processing from the plural host machines 50, by installing the Frame relay device 30 on the route to each host machine, necessary data is cached for each host machine on each route. Consequently, further improvement of response can be expected.
(4) If plural Frame relay devices 30 on the route are made to cache the same data, the improvement of data reliability can be achieved by instructing the Frame relay device 30 on the side near the host machine 50 to execute comparison check on data so as to check data from a Frame relay device 30 located on the lower level.
(5) By providing the battery 32 in the Frame relay device 30 to incorporate the UPS, even under power failure, a shut-down processing from the host machine 50 connected to the UPS can be relayed appropriately. Further, a destage request to the storage apparatus 10 can be transmitted independently.

### <Application example 1>

This application example refers to an example in which when a route table is created within the storage apparatus according to the table creation method of the above-described embodiment, automatic load balance control means is realized by the procedure described later and the function provided for the Frame relay device.

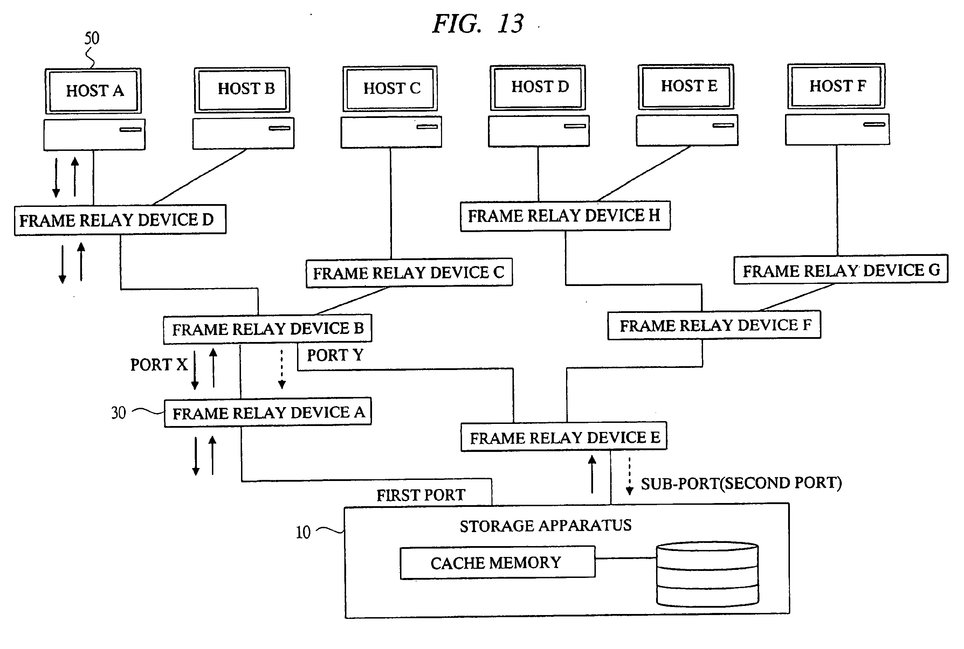

An example of a model of the storage network system of this application example will be described with reference to FIG. 13. FIG. 13 shows the model of the storage network system of this application example.

The model of the storage network system of this application example comprises a storage apparatus 10 constituted of a disk array unit and the like, eight Frame relay devices A-H (30) for relaying data write/read request from the host machine to this storage apparatus 10 and six host machines A-F (50) constituted of information processing units connected to this Frame relay device 30 and the like.

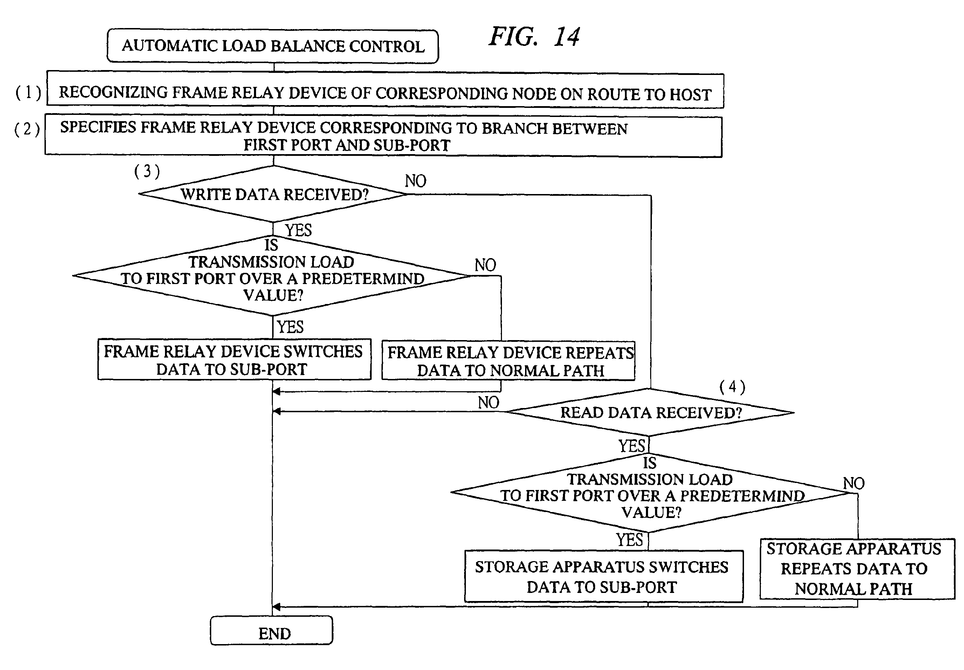

An example of the processing in case of realizing automatic load balance control will be described with reference to FIG. 14. FIG. 14 shows a flow of this processing.
(1) Following the table creation method of the above-described embodiment, the storage apparatus 10 recognizes the Frame relay device 30 located on the route of the host machine 50.
(2) If a substitutive port (sub-port: second port) for a first port is set up in the storage apparatus 10, the storage apparatus 10 searches the Frame relay device 30 on the route of the node A using the sub-port and specifies, for example, a Frame relay device B corresponding to a branch between the first port and the sub-port. That is, it inquires a Frame relay device E about the position (port) and distance (number of repeaters of the Frame relay devices) of the Frame relay devices A, B, D in Fig. 13.
(3) If the transmission load to the first port is more than a specific capacity, the storage apparatus 10 sets up a permission of assigning data to the sub-port to the Frame relay device B.
   For example, if the Frame relay device 30 controls the load balance when the write load from the host machine 50 is excessive, following occurs. If the data transmission load of a port X leading to the first port of the storage apparatus 10 exceeds a value set by the storage apparatus 10 or is estimated to exceed, the Frame relay device B outputs part of data to a port Y leading to the sub-port of the storage apparatus 10 in order to control to maintain the transmission load from the host machine 50 below a specified level.
(4) For example, if when the read load from the host machine 50 is excessive, the storage apparatus 10 controls the load balance, following occurs. If the data transmission load of the first port of the storage apparatus 10 exceeds a specified value in the storage apparatus 10 or is estimated to exceed, the storage apparatus 10 outputs part of data to the sub-port of the storage apparatus 10 to control to maintain the transmission load of the first port below a specified level. Further, the Frame relay device A and the Frame relay device E relays data of each port to a target node (normal operation).

As an effect of this application example, by recognizing the Frame relay device 30 and the port with bridge ID or the like, automatic load balance control can be achieved without necessity of any support such as a program of the host machine 50.

### <Application example 2>

This application example refers to an example of a configuration in which a Frame relay device is disposed at back end and by increasing the memory capacity on the Frame relay device tremendously to use the large capacity memory as a cache memory of the storage controller unit or a shared memory. And the cache memory and the like on the storage controller unit is not provided.

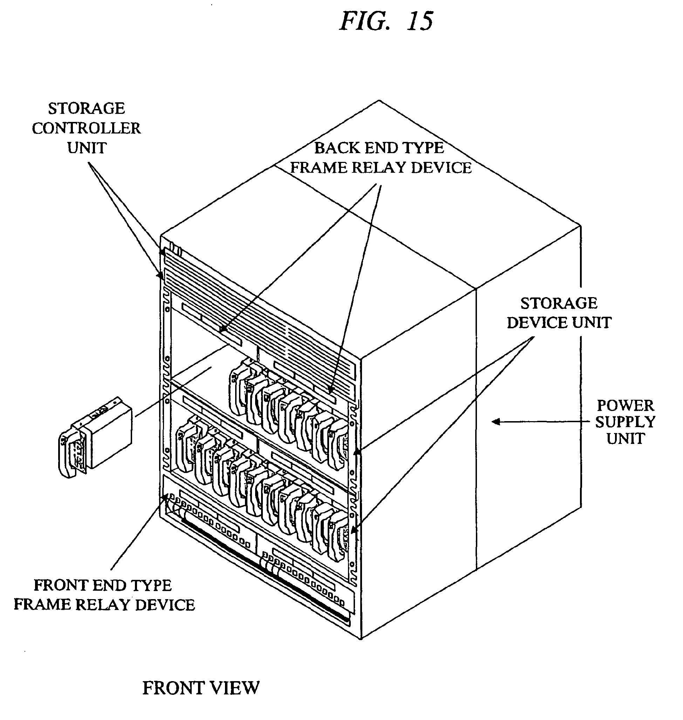

An example of mounting on the blade type system in the storage network system of this application example will be described with reference to FIG. 15. FIG. 15 shows the appearance of the mounting on the blade type system.

As for the mounting onto the blade type system, a storage controller unit, a back end type Frame relay device, a storage device unit and a front end type Frame relay device are disposed in order from the top in a chassis. A power supply unit is disposed on the rear face.

This system facilitates installation of additional memory during power ON or can expand a necessary additional cache memory in accordance with an expansion of the chassis. Further, by linkage with the disk control unit, tuning such as optimization of through-put can be carried out easily.

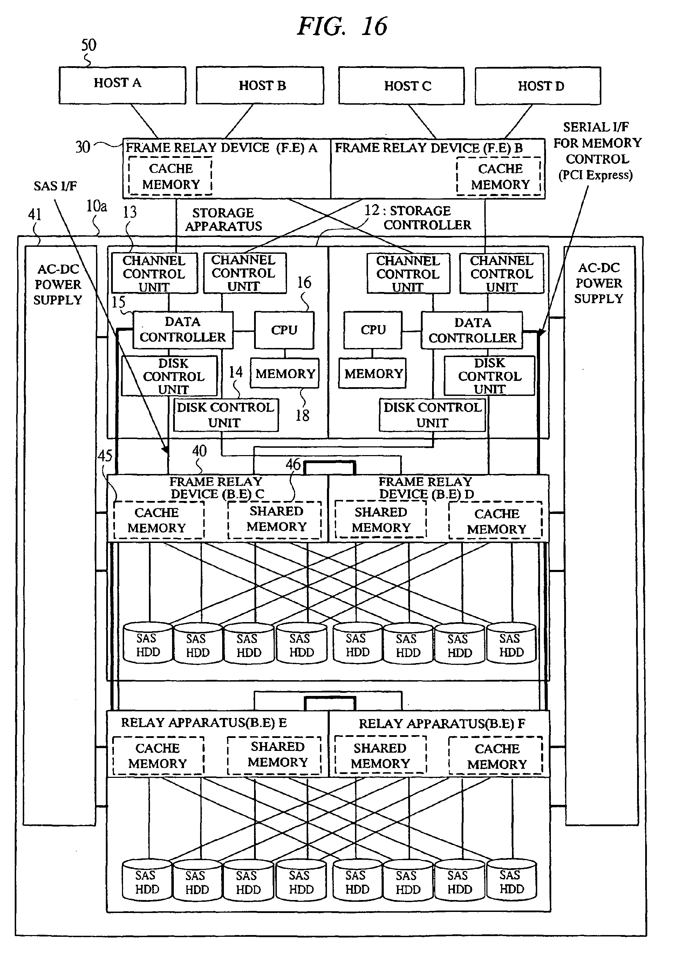

An example of the storage network system of this application example will be described with reference to FIG. 16. FIG. 16 shows the functional blocks of the storage network system.

The storage network system of this application example comprises a storage apparatus 10a composed of a disk array unit and the like, two front end (F.E) type Frame relay devices A, B (30) disposed on the side of the host machine for relaying data write/read request from the host machine to this storage apparatus 10a, four back end (B.E) type Frame relay devices C-F(40) disposed on the side of the storage apparatus and four host machines A-D (50) each composed of information processing unit connected to the Frame relay device 30 and the like.

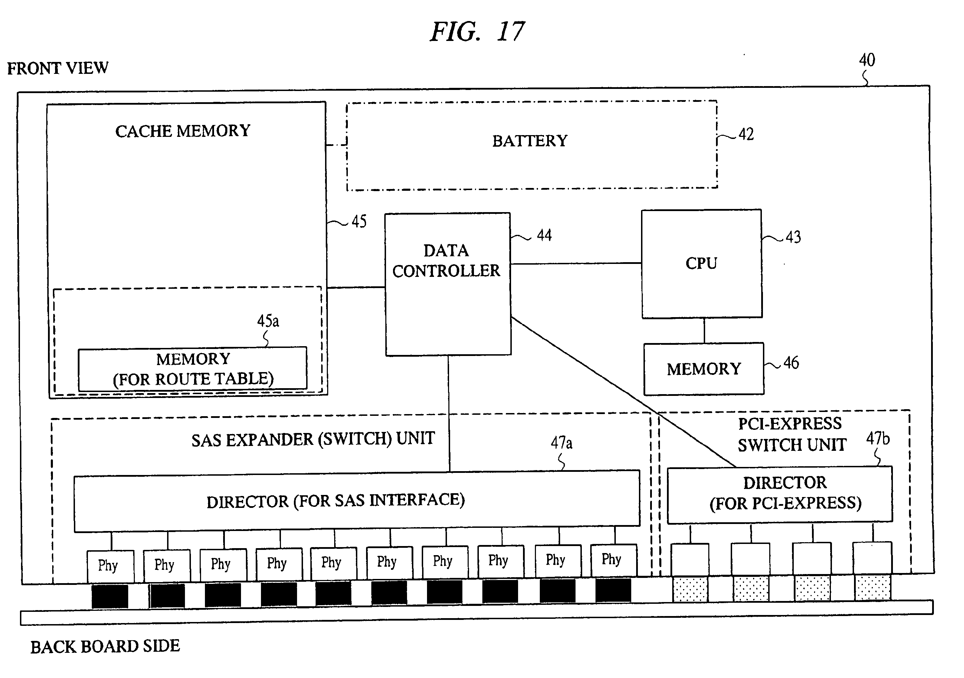

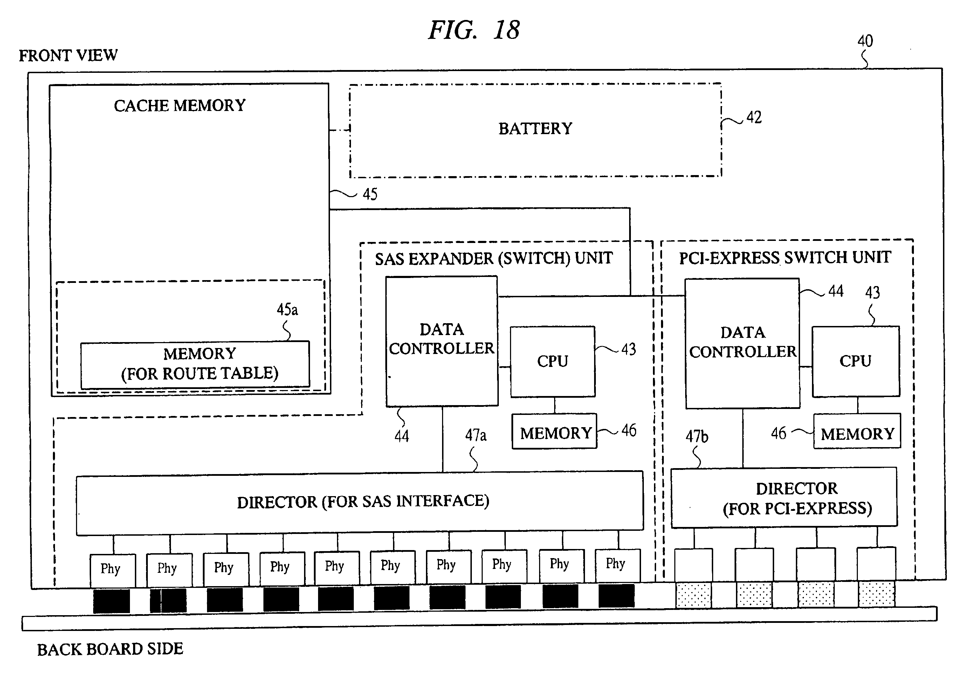

The back end type Frame relay device 40 controls two different interfaces for SAS I/F and serial I/F (PCI express) for memory control with independent switch function. This Frame relay device 40 has substantially the same configuration as the Frame relay device 30 described before (FIGS. 17, 18 described later). However, the cache memory 45 of the Frame relay device 40 for back end is used as a cache memory of the storage apparatus 10a. Although the cache memory 45 and the shared memory 46 are separated for operation, they do not need to be independent of each other in terms of hardware. Further, the AC/DC power 41 of the Frame relay device 40 for back end is shared within the storage apparatus 10a.

Because the Frame relay device 30 for front end has the same structure and operation as the above-described Frame relay device 30, description thereof is omitted.

As for notification from this system to other system, rewrite of the memory or the like is notified to other system using a message transaction function such as PCI express. In the meantime, conversion between the PCI-express and SAS is not carried out (although the cache memory is shared, it operates as independent two switches). As for write to a duplicated section such as the cache memory, the relay apparatus 40 executes duplicating write with a header that accompanies a device identifier of the relay apparatus 4.0 attached. That is, the frame is composed of header information comprising flag specifier, Frame relay device ID of own system device, address specifier, Frame relay device ID of other system device, address specifier, data length and the like and data. Consequently, single time data transmission can satisfy the requirement and traffic can be reduced further. Or it is possible to create a multi-cast group with the own system and other system Frame relay devices 40 to multi-cast data.

At the time of cache read, like the above-described embodiments, other system Frame relay device is instructed to send data and when it passes the own system Frame relay device, the own system Frame relay device verifies the data or the other system Frame relay device is instructed to send only a verification code of that data in order to make the data transferred by the own system Frame relay device verified by the data controller side. Consequently, both reduction of the frequency band and high reliability can be achieved without increasing data transmission volume largely.

An example of the structure of the back end type Frame relay device will be described with reference to FIGS. 17 and 18. FIGS. 17 and 18 show the internal block of the back end type Frame relay device while FIG. 17 indicates a configuration example of the single CPU and FIG. 18 indicates a configuration example of double CPUs.

As shown in FIG. 17, the Frame relay device 40 for back end composed of a single CPU includes a battery 42, a CPU 43, a data controller 44, a cache memory 45, and a memory 46 in common. A director (for SAS interface) 47a of a SAS expander (switch) unit and a director (for PCI-express) 47b of a PCI-express switch unit are connected to the data controller 44. The cache memory 45 is used partially as a shared memory and includes various kinds of tables 45a such as route table.

As contracted to the single CPU structure, as shown in FIG. 18, the Frame relay device 40 for back end having double CPUs includes a CPU 43, a data controller 44 and a memory 46 in each of the SAS expander (switch) unit and PCI-express switch unit. Under this configuration, the SAS expander unit and the PCI-express switch unit are comprised of completely independent hardware.

In the meantime, if a protocol converting unit (I/F converting function) is mounted on the data controller 44 and the PCI-express is changed to LAN, a Frame relay device described later [application example 3] is produced.

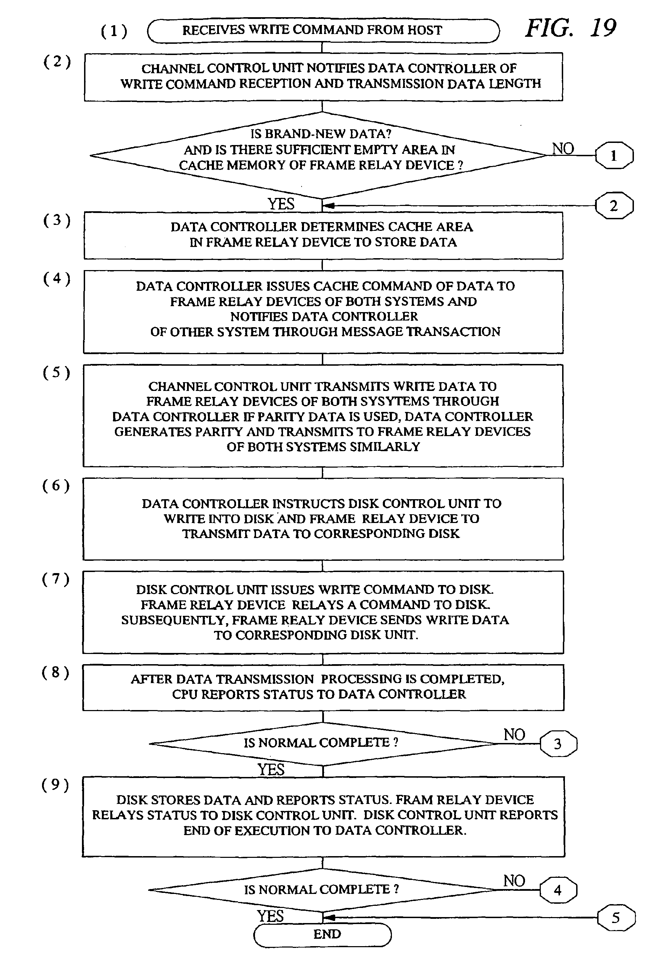

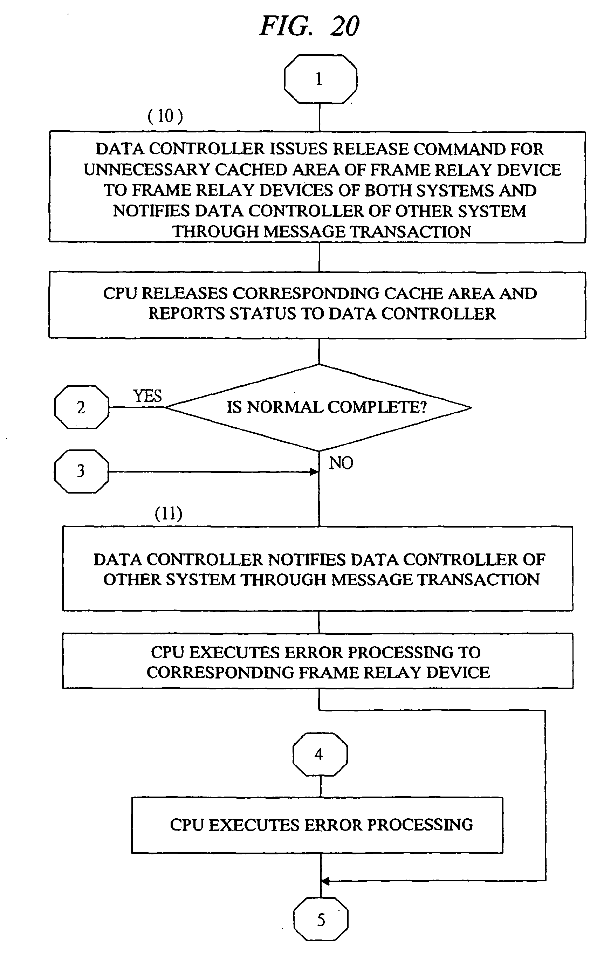

An example of processing at the time of data write into a disk (HDD) of the storage device will be described with reference to FIGS. 19 and 20. FIGS. 19 and 20 show a flow of this processing.

This processing is executed as operations of the storage apparatus 10 and the Frame relay device 40 at the time of data write.
(1) The storage apparatus 10a receives a write command from the host machine 50.
(2) The channel control unit 13 notifies the data controller 15 of receiving the write command and transmission data length.
(3) If the received write data is new data and there is sufficient empty area in the cache memory 45 of the Frame relay device 40, the data controller 15 determines a cache area in the Frame relay device 40 for storing the data.
(4) The data controller 15 issues a data cache command to both the Frame relay devices 40 and notifies other system data controller 15 with message transaction.
(5) The channel control unit 13 transmits write data to the both Frame relay devices 40 through the data controller 15. At this time, if parity data is used, the data controller 15 generates parity and transmits to the Frame relay devices 40 of the both systems in the same way.
(6) The data controller 15 instructs the disk control unit 14 to write into disk and instructs the Frame relay device 40 to send data to the corresponding disk.
(7) The disk control unit 14 issues a disk write command. At this time, the Frame relay device 40 relays that command to that corresponding disk and subsequently, sends write data to the disk unit.
(8) After the data transmission processing is completed, the CPU 43 of the Frame relay device 40 reports a status to the data controller 15.
(9) Then, if it is completed normally, the disk unit records data and reports the status. At this time, the Frame relay device 40 relays the status to the disk control unit 14. Further, the disk control unit 14 reports execution termination to the data controller 15. Then, if it is completed normally, the processing at the time of data write to the disk is completed.
(10) If the received write data is not a new data or there is no sufficient empty area in the cache memory 45 of the Frame relay device 40, the data controller 15 issues cached area release command for the Frame relay device 40 to the unnecessary Frame relay devices 40 of both the systems and notifies the data controller 15 of other system through message transaction. Further, the CPU 43 of the Frame relay device 40 releases the corresponding cached area and reports the status to the data controller 15.
(11) Unless it is completed normally after the CPU 43 of the Frame relay device 40 releases the cached area, the data controller 15 notifies the data controller 15 of other system through message transaction. Further, the CPU 16 of the storage controller unit 12 executes error processing to the Frame relay device 40. Consequently, the processing is completed.

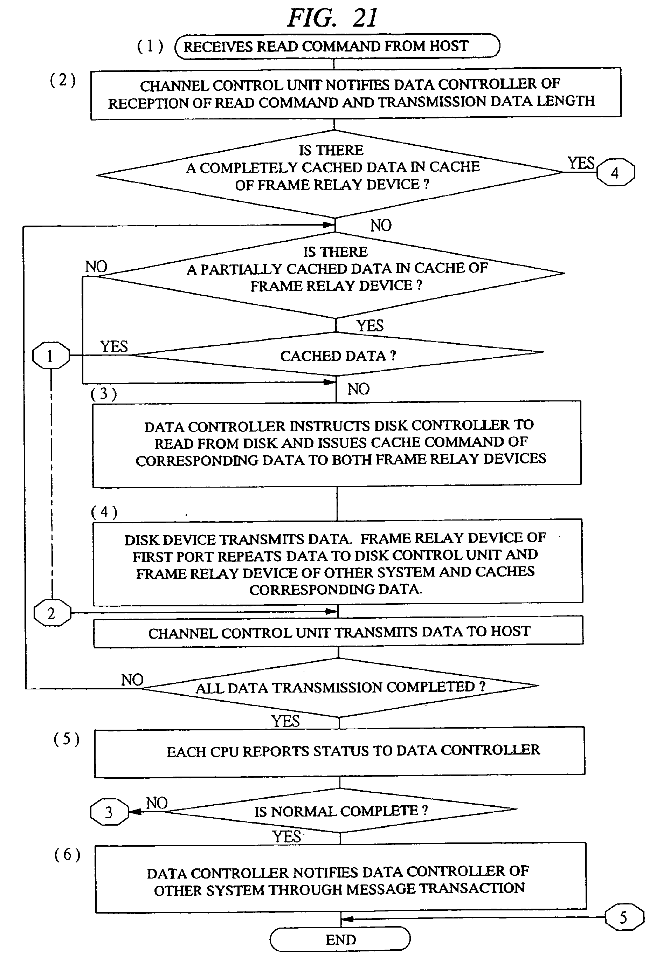

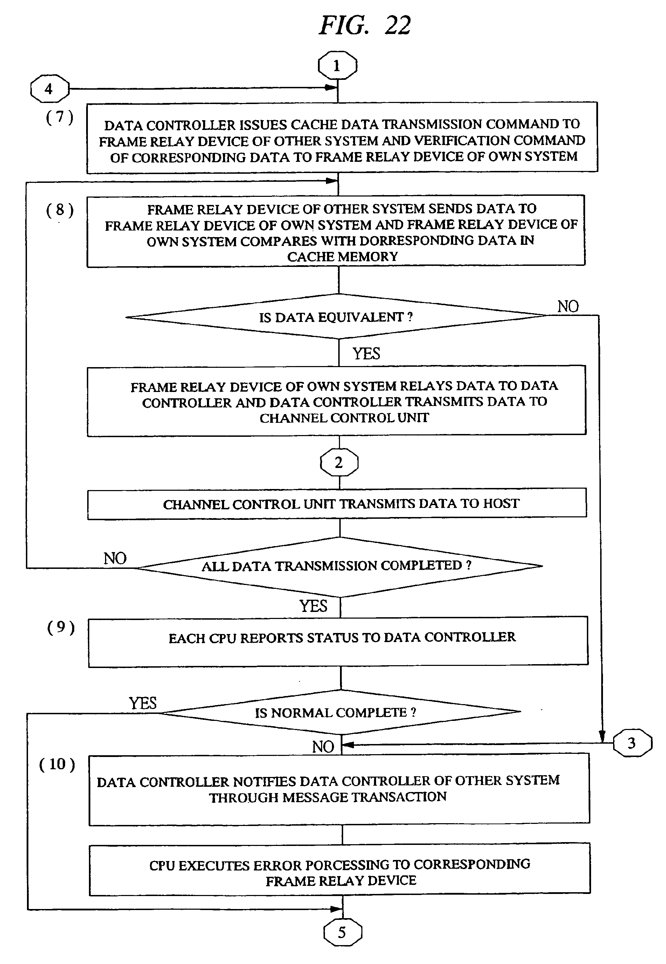

An example of processing at the time of data read from a disk (HDD) of the storage device will be described with reference to FIGS. 21 and 22. FIGS. 21 and 22 show a flow of this processing.

This processing is executed as operations of the storage apparatus 10a and the Frame relay device 40 at the time of data read.
(1) The storage apparatus 10a receives a read command from the host machine 50.
(2) The channel control unit 13 notifies the data controller 15 of reception of read command and transmission data length.
(3) If there exists no corresponding data in the cache memory 45 of the Frame relay device 40 or there exists part of the corresponding data and reading of a portion other than cached data is carried out, the data controller 15 instructs the disk controller 14 to read out from the disk and issues a cache command of the corresponding data to the Frame relay device 40.
(4) The disk unit transfers the data. Then, the Frame relay device 40 of the first port sends the data to the disk control unit 14 and the Frame relay device 40 of other system and caches the data. Further, the channel control unit 13 sends the data to the host machine 50.
(5) If transmission of all data is completed, the CPU 43 of each Frame relay device 40 reports a status to the data controller 15.
(6) If it is completed normally, the data controller 15 notifies the data controller 15 of other system through message transaction that the cached data is updated. Consequently, the processing at the time of data read from the disk is completed.
(7) In reading of case where complete corresponding data exists in the cache memory 45 of the Frame relay device 40 or reading cached data with part of the corresponding data left, the data controller 15 issues a cache data transmission command to the Frame relay device 40 of other system and a verification command for the corresponding data to the Frame relay device 40 of own system.
(8) The Frame relay device 40 of other system sends data to the Frame relay device 40 of own system and this Frame relay device 40 of own system compares with corresponding data in the cache memory 45. If data meet as a result of this comparison, the Frame relay device 40 of own system relays data to the data controller 15 and this data controller 15 sends that data to the channel control unit 13. Then, the channel control unit 13 sends that data to the host machine 50.
(9) If transmission of all data is completed, the CPU 43 of each Frame relay device 40 reports a status to the data controller 15.
(10) If it is completed normally, the processing is finished. If the data verification is completed abnormally, the data controller 15 notifies the data controller 15 of other system of the abnormality generation through message transaction. Then, the CPU 16 implements error processing to the Frame relay device 40. Consequently, the processing is completed.

As described above, the disk control unit 14 of the storage apparatus 10a is released from data transmission so that multiplexing of command is facilitated thereby realizing effective use of the band.

### <Application example 3>

This application example refers to an example in which the protocol converting unit is mounted on the back end type Frame relay device in order that data can be exchanged with conversion function between two systems interfaces that are provided independently in the above described application example 2.

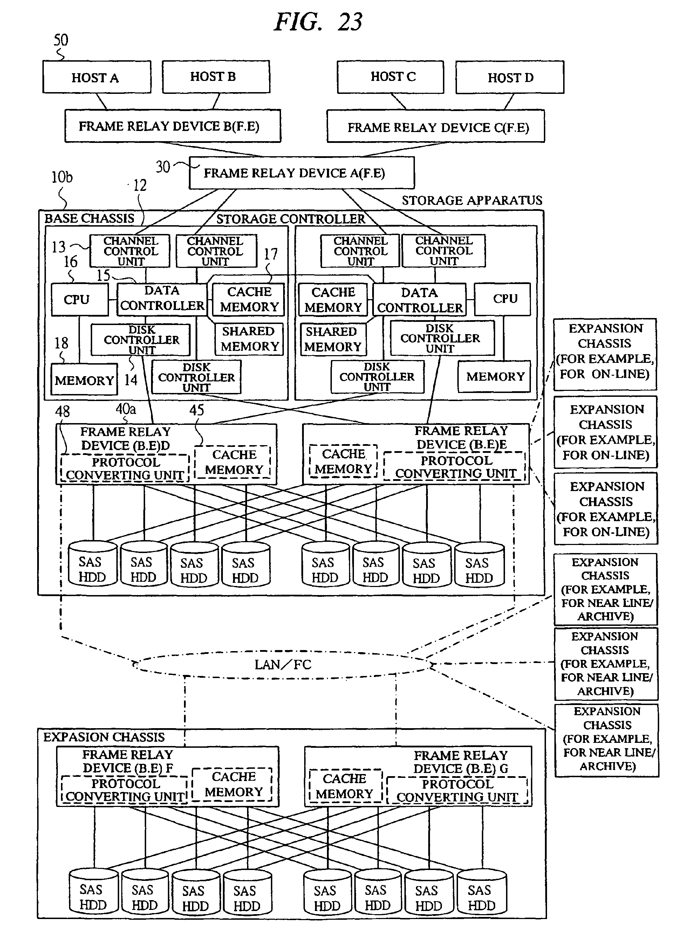

An example of the storage network system of this application example will be described with reference to FIG. 23. FIG. 23 indicates the functional blocks of the storage network system.

The storage network system of this application example comprises a storage apparatus 10b composed of a disk array unit and the like, three front end (F. E) type Frame relay devices A-C (30) disposed on the side of the host machine for relaying data read/write requests from the host machine to the storage apparatus 10b, four back end (B.E) type Frame relay devices D-G (40a) disposed on the side of the storage apparatus and four host machines A-D (50) composed of information processing unit connected to the Frame relay device 30 and the like.

The back end type Frame relay device 40a has the protocol converting unit 48 as I/F conversion function. Because the Frame relay device 40a has the same structure and operation as the back end type Frame relay device 40 described above except in this protocol converting unit 48, description thereof is omitted. Further, because the front end type Frame relay device 30 has the same structure and operation as the above-described front end type Frame relay device 30, description thereof is omitted.

Generally, if the capacity of the cache memory is the same, there is such a problem that as the data capacity of the storage increases, the cache hit rate drops. However, because in this application example, the cache memory is extended to each expansion chassis of the HDD, the ratio between the cache memory capacity and the data capacity can be made constant, so that the drop of the cache hit rate can be prevented.

Although according to the conventional method employing FC loop for the back end, the expansion chassis can be connected only in series, according to this method, the expansion chassis can be disposed in parallel. Hot swap of each expansion chassis or maintenance thereof by separation is possible which is used to be impossible. Further, there is such a merit that the expansion chassis except a last one can be exchanged during power ON. Further, because through pass decreases as compared to the series connection, the transmission band can be used effectively. Additionally, the freedom in layout of the units is large. In the meantime, near-line storage such as SAS can be connected under the structure of WAN.

In this application example, a measure for carrying out protocol conversion between different type interfaces (LAN-FC) at a low load has been taken and this will be described below.

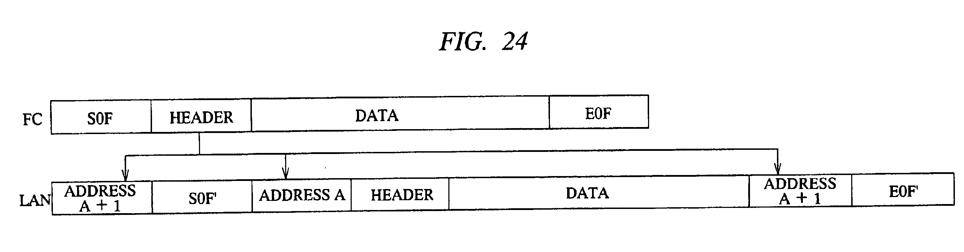

An example of the mechanism for facilitating the conversion with other serial data transmission protocol will be described with reference to FIG. 24. FIG. 24 shows the mechanism for FC-LAN conversion.

In the method using 10b (bit) -8b conversion used widely in fiber channel which is serial I/F for storage apparatus, SAS and the like, protocol conversion is not necessary and what is necessary is to pass protocols mutually and analyze the identifier of each protocol header and distribute it to an appropriate port. However, because in case of LAN, often the above-mentioned 10b-8b conversion is not used except optical transmission interface such as 1000BASE-FX, a large-scale protocol conversion is necessary if no other measure is taken, which leads to increase of circuit scale thereby causing complexity and increase of cost.

Thus, according to this method, as shown in FIG. 24, for transmission/reception of order set with control code (Kxx.x) not existing in LAN not meeting the 10b-8b, the identifier such as MAC address is changed (for example, incremented by 1) and sent as data (for example, equivalent to Dxx.x).

Data link between each port and device/other Frame relay device in initial condition is established according to the conventional method. For example, idle frame and R_RDY of its response are carried out only by the FC side link and are not outputted to the LAN side.

As a result, for example, network transfer speed of the LAN is higher than the transfer speed of SAS or the like. In this case, time loss caused by data volume increment due to frame divisions and by overhead associated with data conversion can be cancelled. Then after the conversion, it becomes physical layer data of a mating side. Thus, the conversion is enabled without making so conscious of the protocol of the mating side. For example, only adjustment of an important portion in terms of timing is necessary. Of course even if the protocol conversion according to ordinary method is carried out, the above-mentioned configuration can be constructed.

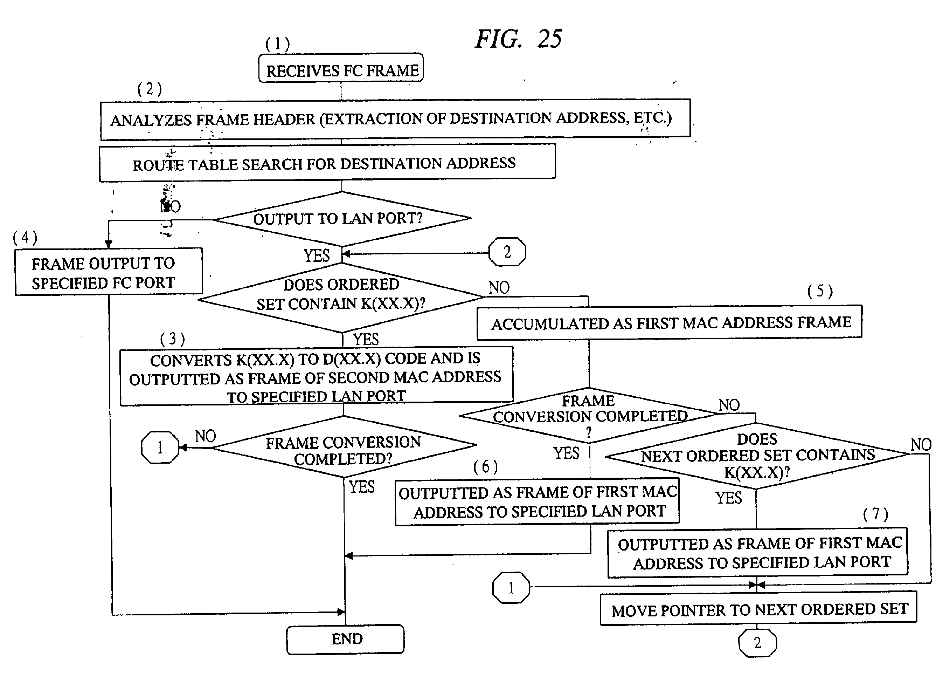

An example of the processing for FC-LAN conversion will be described with reference to FIG. 25. FIG. 25 shows a flow of the FC-LAN conversion processing. In the meantime, conversion of LAN - FC is carried out by inverse conversion of this conversion.

This processing is carried out as an operation of the protocol converting unit 48 in the Frame relay device 40a when FC frame is received.
(1) The Frame relay device 40a receives an FC frame.
(2) The protocol converting unit 48 analyzes the frame header by extracting destination address. Then, the protocol converting unit 48 searches in the route table of the destination address.
(3) If in case of LAN port output, the order set includes (Kxx. x), the protocol converting unit 48 converts (Kxx.x) to code D(xx.x) and outputs to a specified LAN port as the frame of a second MAC address. Then, if the frame conversion is completed, the processing of FC-LAN conversion is completed.
(4) Not in case of LAN port output, the protocol converting unit 48 outputs a frame to a specified FC port. Consequently, the processing is completed.
(5) If the order set does not contain (Kxx.x), the protocol converting unit 48 accumulates first MAC address frame.
(6) If the frame conversion is completed, the protocol converting unit 48 outputs to a specified LAN port as first MAC address frame. Consequently, the processing is completed.
(7) If the frame conversion is not completed, the protocol converting unit 48 determines whether or not next order set contains (Kxx.x). If as a result of this determination, (Kxx.x) is contained, the protocol converting unit 48 outputs to a specified LAN port as first MAC address frame. If the frame conversion is not completed or even if next order set does not contain (Kxx.x), the protocol converting unit 48 moves a pointer to next order set and repeats the processing.

Consequently, due to the conversion function of the protocol converting unit 48, the two interface systems allow data to be brought to or received from each other.

The specific embodiments of the present invention which the present inventors have achieved have been described above. The present invention is not restricted to the above-mentioned embodiments but needless to say, may be modified in various ways within the scope not departing from the gist of the invention.

### <Industrial Applicability of the Invention>

The present invention relates to a storage network system and is effective when it is applied to the storage network system, particularly a network system in which Frame relay devices are disposed between host machines and storage apparatus and can be widely applied to network Frame relay devices such as network switch, router in NAS and fiber channel switch, SAS expander in SAN and the like.

## Claims

1. A storage network system comprising:
a storage apparatus (10) having a storage device (11) for storing data therein and a storage controller unit (12) for controlling data write and data read to the storage device; and
a Frame relay device (30) for relaying data write request and data read request from a upper level apparatus (50) to the storage apparatus (10), wherein
the Frame relay device (30) contains a cache memory (35) for storing read data transmitted from the storage apparatus,
**characterized in that:**
before sending data to the Frame relay device (30), the storage apparatus (10) is arranged to carry out processing of issuing a command for storing the data in the cache memory (35) of the Frame relay device when receiving data read request from the upper level apparatus (50), and processing of issuing a command to the Frame relay device to send the data to the specified upper level apparatus if any specified upper level apparatus issues a read request for the same data again, and
the Frame relay device (30) is arranged to carry out processing of sending the data stored in its own cache memory (35) to the specified upper level apparatus (50).

2. The storage network system according to claim 1 wherein
the Frame relay device (30) has a battery (32) for supplying a voltage at the time of power failure.

3. The storage network system according to claim 1 wherein
the Frame relay device (30) is arranged to carry out processing of storing a part of the data when storing the data, and
the storage apparatus (10) is arranged to issue a command to the Frame relay device (30) for transmitting part of the data, and to read the remaining data in the storage device (11) while the Frame relay device is transmitting the part of the data to said specified upper level apparatus (50).

4. The storage network system according to claim 1 wherein
the Frame relay devices (30) are provided in plural numbers and the respective Frame relay devices are disposed between the storage apparatus (10) and the upper level apparatus (50) on plural routes.

5. The storage network system according to claim 4 wherein
the storage apparatus (10) includes a means for selecting the Frame relay device (30) and a table (17a) for controlling the position information of the Frame relay device in order to allow issuing of a command to the Frame relay device.

6. The storage network system according to claim 4 wherein
each Frame relay device (30) on the plural routes is arranged to carry out processing of storing different data.

7. The storage network system according to claim 6 wherein the Frame relay device (30) is arranged to carry out processing of storing a part of the data when storing the data, and
the storage apparatus (10) is arranged to carry out processing of accessing remaining data of the data in said storage device (11) while the respective Frame relay devices (30) are transmitting the part of the data to the specified upper level apparatus (50).

8. The storage network system according to claim 4 wherein
the system is arranged to carry out processing of storing specified same data in plural Frame relay devices (30) on the same route within the plural routes.

9. The storage network system according to claim 8 wherein
a first Frame relay device (30) specified by specification of the storage controller unit is arranged to send data to a second Frame relay device (30) and the second Frame relay device is arranged to verify the data.

10. The storage network system according to claim 9 wherein
each Frame relay device (30), when storing the data, is arranged to carry out processing of storing part of the data and
the storage apparatus (10) is arranged to carry out processing of accessing remaining data of the data in the storage device (11) while the respective Frame relay devices (30) are transmitting the part of the data to the specified upper level apparatus (50).

11. The storage network system according to claim 4 wherein
each Frame relay device (30) is arranged to carry out processing of destroying cached data in any case where no transmission request is made for specific data over a predetermined time, where the storage apparatus (10) is deleted from a route table (35a), where the remaining capacity in the cache memory (35) is smaller than data requested to be cached, or where abnormality is detected at the time of data verification.

12. The storage network system according to claim 4 wherein
each Frame relay device (30) is arranged to carry out processing of destroying the cached data according to a command of the storage apparatus (10).

13. The storage network system according to claim 4 wherein
each Frame relay device (30) is arranged to assign a cache area of a specified volume to each storage controller unit (12) preliminarily and
the storage controller unit (12) is arranged to grasp a capacity assigned to itself by inquiry and control each Frame relay device (30) not to execute cache request over the assigned capacity.

14. The storage network system according to claim 4 wherein
each Frame relay device (30) is arranged to carry out processing of sending a message to the storage controller unit (12) when a change over a specified level occurs in an area in which the cache area is capable of being assigned by deleting the cached data, and
the storage controller unit (12) is arranged to carry out processing of grasping again a capacity assigned to itself by inquiry in accordance with receipt of the message.

15. The storage network system according to claim 4 wherein
the storage apparatus (10) is arranged to select a first port for each Frame relay device (30) and if data transmission load to the first port is over a specified volume, and the storage apparatus is arranged to set permission for assignment of data to the second port corresponding to the first port.

16. The storage network system according to claim 4 wherein
each Frame relay device (30) is arranged to automatically control to output a part of the data to a second port corresponding to the first port when the data transmission load to the first port is over a threshold set by the storage apparatus (10).

17. The storage network system according to claim 4 wherein
of the plural Frame relay devices (30), a third Frame relay device (40) is arranged to control different interfaces of two or more kinds by independent switch functions and the cache memory (45) provided on the third Frame relay device is accessible from each of the different interfaces.

18. The storage network system according to claim 17 wherein
the third Frame relay device (40) is disposed on a back end side of the storage apparatus (10) and connected to a device in the storage apparatus.

19. The storage network system according to claim 17 wherein
the third Frame relay device (40) is arranged to transfer two or more duplicated data to plural devices specified by a command of the storage controller unit (12).

20. The storage network system according to claim 18 wherein
the third Frame relay devices (40) are provided in plural numbers and
of the plural third Frame relay devices (40), one Frame relay device specified by a command of the storage controller unit (12) is arranged to send data to redundant Frame relay device of other system and the Frame relay device of the other system is arranged to verify the data.

21. The storage network system according to claim 17 wherein
the third Frame relay devices (40) are provided in plural numbers and
of said plural third Frame relay devices (40), a fourth Frame relay device has a protocol converting unit for converting between different interfaces of two or more kinds and is arranged to execute mutual data exchange of data between the different interfaces mutually.

22. The storage network system according to claim 21 wherein
the protocol converting unit is arranged to change an identifier to send sending/receiving of ordered set with control code as data.

23. A storage network system according to claim 1, comprising:
plural Frame relay devices (30), wherein
the plural Frame relay devices (30) have cache memory (35) for storing data read out from the storage device (11), and
the storage apparatus (10) is arranged to carry out said processing of sending the data to the Frame relay device (30) with addition of instructions for storing the data in the cache memory (35) of the Frame relay device,
the Frame relay device (30) is arranged to carry out processing of storing a part of the data when storing the data,
the storage apparatus (10) is arranged to carry out processing of accessing remaining data of the data in said storage device while the Frame relay device is transmitting the part of the data to the specified upper level unit and
a command and a frame having a short response are arranged to be sent or received between the storage apparatus and the Frame relay device.

## Patentansprüche

1. Netzwerkspeichersystem, umfassend:
eine Speichervorrichtung (10) mit einem Speichergerät (11) zum Speichern von Daten darin und einer Speichersteuereinheit (12) zum Steuern des Schreibens und Lesens von Daten auf dem Speichergerät; und
ein Frameübermittlungsgerät (30) zum Übermitteln einer Datenschreibanfrage und einer Datenleseanfrage von einer übergeordneten Vorrichtung (50) an die Speichervorrichtung (10), wobei
das Frameübermittlungsgerät (30) einen Cachespeicher (35) zum Speichern von von der Speichervorrichtung übertragenen Lesedaten,
**gekennzeichnet dadurch, dass:**
die Speichervorrichtung (10), bevor sie Daten zum Frameübermittlungsgerät (30) schickt, dazu ausgelegt ist, einen Verarbeitungsvorgang zur Ausgabe einer Anweisung zum Speichern der Daten im Cachespeicher (35) des Frameübermittlungsgeräts auszuführen, wenn sie eine Datenleseanfrage von der übergeordneten Vorrichtung (50) empfängt, und einen Verarbeitungsvorgang zur Ausgabe einer Anweisung an das Frameübermittlungsgerät zum Senden der Daten an die spezifizierte übergeordneten Vorrichtung auszuführen, falls irgendeine spezifizierte übergeordnete Vorrichtung erneut eine Leseanfrage für die gleichen Daten ausgibt, und
das Frameübermittlungsgerät (30) dazu ausgelegt ist, einen Verarbeitungsvorgang zum Schicken der in seinem eigenen Cachespeicher (35) gespeicherten Daten an die spezifizierte übergeordnete Vorrichtung (50) auszuführen.

2. Netzwerkspeichersystem nach Anspruch 1, wobei
das Frameübermittlungsgerät (30) eine Batterie (32) zum Bereitstellen einer Spannung im Zeitpunkt eines Stromausfalls aufweist.

3. Netzwerkspeichersystem nach Anspruch 1, wobei
das Frameübermittlungsgerät (30) dazu ausgelegt ist, einen Verarbeitungsvorgang zum Speichern eines Teils der Daten auszuführen, wenn es die Daten speichert, und
die Speichervorrichtung (10) dazu ausgelegt ist, eine Anweisung an das Frameübermittlungsgerät (30) zum Übertragen eines Teils der Daten auszugeben und die übrigen Daten im Speichergerät (11) zu lesen, während das Frameübermittlungsgerät den Teil der Daten an die spezifizierte übergeordnete Vorrichtung (50) überträgt.

4. Netzwerkspeichersystem nach Anspruch 1, wobei
die Frameübermittlungsgeräte (30) in Mehrzahl vorgesehen sind und die jeweiligen Frameübermittlungsgeräte zwischen der Speichervorrichtung (10) und der übergeordneten Vorrichtung (50) auf mehreren Routen vorgesehen sind.

5. Netzwerkspeichersystem nach Anspruch 4, wobei
die Speichervorrichtung (10) eine Einrichtung zum Auswählen des Frameübermittlungsgeräts (30) und eine Tabelle (17a) zum Steuern der Positionsinformationen des Frameübermittlungsgeräts enthält, um das Ausgeben einer Anweisung an das Frameübermittlungsgerät zu ermöglichen.

6. Netzwerkspeichersystem nach Anspruch 4, wobei
jedes Frameübermittlungsgerät (30) auf den mehreren Routen dazu ausgelegt ist, einen Verarbeitungsvorgang zum Speichern verschiedener Daten auszuführen.

7. Netzwerkspeichersystem nach Anspruch 6, wobei das Frameübermittlungsgerät (30) dazu ausgelegt ist, einen Verarbeitungsvorgang zum Speichern eines Teils der Daten auszuführen, wenn es die Daten speichert, und
die Speichervorrichtung (10) dazu ausgelegt ist, einen Verarbeitungsvorgang zum Zugreifen auf übrige Daten der Daten im Speichergerät (11) auszuführen, während die jeweiligen Frameübermittlungsgeräte (30) den Teil der Daten an die spezifizierte übergeordnete Vorrichtung (50) übertragen.

8. Netzwerkspeichersystem nach Anspruch 4, wobei
das System dazu ausgelegt ist, einen Verarbeitungsvorgang zum Speichern spezifizierter gleicher Daten in mehreren Frameübermittlungsgeräten (30) auf der gleichen Route innerhalb der mehreren Routen auszuführen.

9. Netzwerkspeichersystem nach Anspruch 8, wobei
ein erstes Frameübermittlungsgerät (30), das durch eine Spezifikation der Speichersteuereinheit spezifiziert worden ist, dazu ausgelegt ist, Daten an ein zweites Frameübermittlungsgerät (30) zu schicken, und das zweite Frameübermittlungsgerät dazu ausgelegt ist, die Daten zu überprüfen.

10. Netzwerkspeichersystem nach Anspruch 9, wobei
jedes Frameübermittlungsgerät (30), wenn es die Daten speichert, dazu ausgelegt ist, einen Verarbeitungsvorgang zum Speichern eines Teils der Daten auszuführen, und
die Speichervorrichtung (10) dazu ausgelegt ist, einen Verarbeitungsvorgang zum Zugreifen auf übrige Daten der Daten im Speichergerät (11) auszuführen, während die jeweiligen Frameübermittlungsgeräte (30) den Teil der Daten an die spezifizierte übergeordnete Vorrichtung (50) übertragen.

11. Netzwerkspeichersystem nach Anspruch 4, wobei
jedes Frameübermittlungsgerät (30) dazu ausgelegt ist, einen Verarbeitungsvorgang zum Vernichten cache-gespeicherter Daten auszuführen, falls über einen vorgegebenen Zeitraum keine Übertragungsanfrage für spezifische Daten gemacht worden ist, wobei die Speichervorrichtung (10) von einer Routentabelle (35a) ausgelöscht wird, wenn die verbleibende Kapazität im Cachespeicher (35) kleiner ist als die Daten, deren Cache-Speicherung angefordert worden ist, oder wenn ein anomaler Zustand im Zeitpunkt der Datenüberprüfung detektiert worden ist.

12. Netzwerkspeichersystem nach Anspruch 4, wobei
jedes Frameübermittlungsgerät (30) dazu ausgelegt ist, einen Verarbeitungsvorgang zum Vernichten der cache-gespeicherten Daten gemäß einer Anweisung der Speichervorrichtung (10) auszuführen.

13. Netzwerkspeichersystem nach Anspruch 4, wobei
jedes Frameübermittlungsgerät (30) dazu ausgelegt ist, jeder Speichersteuereinheit (12) im Voraus einen Cachebereich eines spezifizierten Volumens zuzuschreiben, und
die Speichersteuereinheit (12) dazu ausgelegt ist, eine ihr selbst zugeschriebene Kapazität durch Anfragen zu erfassen und jedes Frameübermittlungsgerät (30) dahingehend zu steuern, dass keine Cache-Anfrage über die zugeschriebene Kapazität hinaus ausgeführt wird.

14. Netzwerkspeichersystem nach Anspruch 4, wobei
jedes Frameübermittlungsgerät (30) dazu ausgelegt ist, einen Verarbeitungsvorgang zum Schicken einer Nachricht an die Speichersteuereinheit (12) auszuführen, wenn eine Änderung über eine vorgegebene Stufe in einem Bereich auftritt, in dem der Cachebereich durch Löschen der cache-gespeicherten Daten zugeschrieben werden kann, und
die Speichersteuereinheit (12) dazu ausgelegt ist, einen Verarbeitungsvorgang zum erneuten Erfassen einer ihr selbst zugeschriebenen Kapazität durch Anfragen auf den Erhalt der Nachricht hin auszuführen.

15. Netzwerkspeichersystem nach Anspruch 4, wobei
die Speichervorrichtung (10) dazu ausgelegt ist, einen ersten Port für jedes Frameübermittlungsgerät (30) auszuwählen und, falls eine Datenübertragungslast an den ersten Port ein spezifiziertes Volumen übersteigt, eine Erlaubnis zum Zuschreiben der Daten zu dem dem ersten Port entsprechenden zweiten Port zu geben.

16. Netzwerkspeichersystem nach Anspruch 4, wobei
jedes Frameübermittlungsgerät (30) dazu ausgelegt ist, die Ausgabe eines Teils der Daten an einen dem ersten Port entsprechenden zweiten Port automatisch zu steuern, wenn die Datenübertragungslast an den ersten Port einen von der Speichervorrichtung (10) gesetzten Schwellenwert überschreitet.

17. Netzwerkspeichersystem nach Anspruch 4, wobei
ein drittes Frameübermittlungsgerät (40) aus den mehreren Frameübermittlungsgeräten (30) dazu ausgelegt ist, verschiedene Schnittstellen zweier oder mehrerer Sorten durch unabhängige Schaltfunktionen zu steuern, und der im dritten Frameübermittlungsgerät vorgesehene Cachespeicher (45) von jeder der verschiedenen Schnittstellen aus zugänglich ist.

18. Netzwerkspeichersystem nach Anspruch 17, wobei
das dritte Frameübermittlungsgerät (40) auf einer Seite am rückwärtigen Ende der Speichervorrichtung (10) angeordnet und mit einem Gerät in der Speichervorrichtung verbunden ist.

19. Netzwerkspeichersystem nach Anspruch 17, wobei
das dritte Frameübermittlungsgerät (40) dazu ausgelegt ist, zwei oder mehrere duplizierte Daten an mehrere durch eine Anweisung der Speichersteuereinheit (12) spezifizierte Geräte zu übertragen.

20. Netzwerkspeichersystem nach Anspruch 18, wobei
die dritten Frameübermittlungsgeräte (40) in Mehrzahl vorgesehen sind und
ein durch eine Anweisung der Speichersteuereinheit (12) spezifiziertes Frameübermittlungsgerät aus den mehreren dritten Frameübermittlungsgeräten (40) dazu ausgelegt ist, Daten zu einem redundanten Frameübermittlungsgerät eines anderen Systems zu schicken, und das Frameübermittlungsgerät des anderen Systems dazu ausgelegt ist, die Daten zu überprüfen.

21. Netzwerkspeichersystem nach Anspruch 17, wobei
die dritten Frameübermittlungsgeräte (40) in Mehrzahl vorgesehen sind und
eine viertes Frameübermittlungsgerät aus den mehreren dritten Frameübermittlungsgeräten (40) eine Protokollumwandlungseinheit zum Umwandeln bei verschiedenen Schnittstellen zweier oder mehrerer Sorten aufweist und dazu ausgelegt ist, gegenseitigen Austausch von Daten zwischen den verschiedenen Schnittstellen auszuführen.

22. Netzwerkspeichersystem nach Anspruch 21, wobei
die Protokollumwandlungseinheit dazu ausgelegt ist, eine Identifikation zu ändern, um das Senden/Empfangen einer geordneten Menge mit Steuercode als Daten abzuschicken.

23. Netzwerkspeichersystem nach Anspruch 1, umfassend:
mehrere Frameübermittlungsgeräte (30), wobei
die mehreren Frameübermittlungsgeräte (30) einen Cachespeicher (35) zum Speichern von aus dem Speichergerät (11) gelesenen Daten aufweisen, und
die Speichervorrichtung (10) dazu ausgelegt ist, den Verarbeitungsvorgang zum Schicken der Daten an das Frameübermittlungsgerät (30) unter Hinzufügung von Anweisungen zum Speichern der Daten im Cachespeicher (35) des Frameübermittlungsgeräts auszuführen,
das Frameübermittlungsgerät (30) dazu ausgelegt ist, einen Verarbeitungsvorgang zum Speichern eines Teils der Daten auszuführen, wenn es die Daten speichert,
die Speichervorrichtung (10) dazu ausgelegt ist, einen Verarbeitungsvorgang zum Zugreifen auf übrige Daten der Daten im Speichergerät auszuführen, während das Frameübermittlungsgerät den Teil der Daten an die spezifizierte übergeordnete Einheit überträgt, und
eine Anweisung und ein Frame mit einer kurzen Antwort dazu ausgelegt sind, zwischen der Speichervorrichtung und dem Frameübermittlungsgerät verschickt oder empfangen zu werden.

## Revendications

1. Système de réseau de mémorisation comportant :
un dispositif de mémorisation (10) ayant un dispositif de mémorisation (11) pour mémoriser des données dans celui-ci et une unité de contrôleur de mémorisation (12) pour commander l'écriture de données dans le dispositif de mémorisation et la lecture de données depuis celui-ci, et
un dispositif de relais de trame (30) pour relayer une demande d'écriture de données et une demande de lecture de données depuis un dispositif de niveau supérieur (50) vers le dispositif de mémorisation (10), dans lequel
le dispositif de relais de trame (30) contient une mémoire cache (35) pour mémoriser des données lues transmises depuis le dispositif de mémorisation, **caractérisé en ce que :**
avant l'envoi des données au dispositif de relais de trame (30), le dispositif de mémorisation (10) est conçu pour exécuter un traitement d'émission d'une instruction pour mémoriser les données dans la mémoire cache (35) du dispositif de relais de trame lors de la réception d'une demande de lecture de données en provenance du dispositif du niveau supérieur (50), et un traitement d'émission d'une instruction vers le dispositif de relais de trame pour envoyer les données au dispositif de niveau supérieur spécifié si un dispositif de niveau supérieur spécifié quelconque émet à nouveau une demande de lecture pour les mêmes données, et
le dispositif de relais trame (30) est conçu pour exécuter un traitement d'envoi des données mémorisées dans sa propre mémoire cache (35) au dispositif de niveau supérieur (50) spécifié.

2. Système de réseau de mémorisation selon la revendication 1 dans lequel
le dispositif de relais de trame (30) a une batterie (32) pour délivrer une tension au moment d'une coupure de courant.

3. Système de réseau de mémorisation selon la revendication 1 dans lequel
le dispositif de relais de trame (30) est conçu pour exécuter un traitement de mémorisation d'une partie des données lors de la mémorisation des données, et
le dispositif de mémorisation (10) est conçu pour émettre une instruction vers le dispositif de relais de trame (30) afin de transmettre une partie des données, et pour lire les données restantes dans le dispositif de mémorisation (11) alors que le dispositif de relais de trame est en cours de transmission de la partie des données audit dispositif de niveau supérieur (50) spécifié.

4. Système de réseau de mémorisation selon la revendication 1 dans lequel
une pluralité de dispositifs de relais de trame (30) est fournie et les dispositifs de relais de trame respectifs sont disposés entre le dispositif de mémorisation (10) et le dispositif de niveau supérieur (50) sur une pluralité de trajets.

5. Système de réseau de mémorisation selon la revendication 4 dans lequel
le dispositif de mémorisation (10) inclut des moyens pour sélectionner le dispositif de relais de trame (30) et un tableau (17a) pour commander les informations de disposition du dispositif de relais de trame afin de permettre l'envoi d'une instruction au dispositif de relais de trame.

6. Système de réseau de mémorisation selon la revendication 4 dans lequel
chaque dispositif de relais de trame (30) sur la pluralité de trajets est conçu pour exécuter un traitement de mémorisation de différentes données.

7. Système de réseau de mémorisation selon la revendication 6 dans lequel le dispositif de relais de trame (30) est conçu pour exécuter un traitement de mémorisation d'une partie des données lors de la mémorisation des données, et
le dispositif de mémorisation (10) est conçu pour exécuter un traitement d'accès aux données restantes parmi les données dudit dispositif de mémorisation (11) alors que les dispositifs de relais de trame (30) respectifs sont en cours de transmission de la partie des données au dispositif de niveau supérieur (50) spécifié.

8. Système de réseau de mémorisation selon la revendication 4 dans lequel
le système est conçu pour exécuter un traitement de mémorisation des mêmes données spécifiées dans la pluralité de dispositifs de relais de trame (30) sur le même trajet parmi la pluralité de trajets.

9. Système de réseau de mémorisation selon la revendication 8 dans lequel
un premier dispositif de relais de trame (30) spécifié par la spécification de l'unité de contrôleur de mémorisation est conçu pour envoyer des données à un deuxième dispositif de relais de trame (30) et le deuxième dispositif de relais de trame est conçu pour vérifier les données.

10. Système de réseau de mémorisation selon la revendication 9 dans lequel
chaque dispositif de relais de trame (30), lors de la mémorisation des données, est conçu pour exécuter un traitement de mémorisation d'une partie des données, et
le dispositif de mémorisation (10) est conçu pour exécuter un traitement d'accès aux données restantes parmi les données dans le dispositif de mémorisation (11) alors que les dispositifs de relais de trame (30) respectifs sont en cours de transmission de la partie des données au dispositif de niveau supérieur (50) spécifié.

11. Système de réseau de mémorisation selon la revendication 4 dans lequel
chaque dispositif de relais de trame (30) est conçu pour exécuter un traitement consistant à détruire des données mises en cache dans n'importe quel cas lorsqu'aucune demande de transmission n'est effectuée pour des données spécifiques sur une durée prédéterminée, lorsque le dispositif de mémorisation (10) est supprimé d'un tableau de trajets (35a), lorsque la capacité restante dans la mémoire cache (35) est inférieure aux données demandées à mettre en cache, ou lorsqu'une anomalie est détectée au moment de la vérification de données.

12. Système de réseau de mémorisation selon la revendication 4 dans lequel
chaque dispositif de relais de trame (30) est conçu pour exécuter un traitement consistant à détruire les données mises en cache conformément à une instruction du dispositif de mémorisation (10).

13. Système de réseau de mémorisation selon la revendication 4 dans lequel
chaque dispositif de relais de trame (30) est conçu pour attribuer une zone de cache d'un volume spécifié à chaque unité de contrôleur de mémorisation (12) au préalable, et
l'unité de contrôleur de mémorisation (12) est conçue pour saisir une capacité qui lui est attribuée par requête et commander à chaque dispositif de relais de trame (30) de ne pas exécuter une demande de cache sur la capacité attribuée.

14. Système de réseau de mémorisation selon la revendication 4 dans lequel
chaque dispositif de relais de trame (30) est conçu pour exécuter un traitement consistant à envoyer un message à l'unité de contrôleur de mémorisation (12) lorsqu'un changement sur un niveau spécifié survient dans une zone dans laquelle la zone de cache est susceptible d'être attribuée en supprimant les données mises en cache, et
l'unité de contrôleur de mémorisation (12) est conçue pour exécuter à nouveau un traitement de saisie d'une capacité qui lui est attribuée par requête conformément à une réception du message.

15. Système de réseau de mémorisation selon la revendication 4 dans lequel
le dispositif de mémorisation (10) est conçu pour sélectionner un premier port pour chaque dispositif de relais de trame (30) et si la charge de transmission de données dans le premier port est au-dessus d'un volume spécifié, et le dispositif de mémorisation est conçu pour définir une autorisation d'attribution de données au second port correspondant au premier port.

16. Système de réseau de mémorisation selon la revendication 4 dans lequel
chaque dispositif de relais de trame (30) est conçu pour commander automatiquement la sortie d'une partie des données vers un second port correspondant au premier port lorsque la charge de transmission de données dans le premier port est au-dessus d'un seuil défini par le dispositif de mémorisation (10).

17. Système de réseau de mémorisation selon la revendication 4 dans lequel
parmi la pluralité de dispositifs de relais de trame (30), un troisième dispositif de relais de trame (40) est conçu pour commander différentes interfaces de deux ou plus de deux types par l'intermédiaire de fonctions de commutation indépendantes et la mémoire cache (45) agencée sur le troisième dispositif de relais de trame est accessible depuis chacune des différentes interfaces.

18. Système de réseau de mémorisation selon la revendication 17 dans lequel
le troisième dispositif de relais de trame (40) est disposé sur un côté d'extrémité arrière du système de mémorisation (10) et connecté à un dispositif dans le dispositif de mémorisation.

19. Système de réseau de mémorisation selon la revendication 17 dans lequel
le troisième dispositif de relais de trame (40) est conçu pour transférer deux ou plus de deux données dupliquées vers une pluralité de dispositifs spécifiés par une instruction de l'unité de contrôleur de mémorisation (12).

20. Système de réseau de mémorisation selon la revendication 18 dans lequel
une pluralité de dispositifs de relais de trame (40) est fournie, et
parmi la pluralité de troisièmes dispositifs de relais de trame (40), un dispositif de relais de trame spécifié par une instruction de l'unité de contrôleur de mémorisation (12) est conçu pour envoyer des données à un dispositif de relais de trame redondant d'un autre système et le dispositif de relais de trame de l'autre système est conçu pour vérifier les données.

21. Système de réseau de mémorisation selon la revendication 17 dans lequel
une pluralité de troisièmes dispositifs de relais de trame (40) est fournie, et
parmi ladite pluralité de troisièmes dispositifs de relais de trame (40), un quatrième dispositif de relais de trame a une unité de conversion de protocole pour effectuer une conversion entre différentes interfaces de deux ou plus de deux types et est conçu pour exécuter un échange de données mutuel entre les différentes interfaces de manière mutuelle.

22. Système de réseau de mémorisation selon la revendication 21 dans lequel
l'unité de conversion de protocole est conçue pour changer un identifiant pour envoyer/recevoir un ensemble ordonné ayant un code de commande sous forme de données.

23. Système de réseau de mémorisation selon la revendication 1, comportant :
une pluralité de dispositifs de relais de trame (30), dans lequel
la pluralité de dispositifs de relais de trame (30) a une mémoire cache (35) pour mémoriser des données extraites du dispositif de mémorisation (11), et
le dispositif de mémorisation (10) est conçu pour exécuter ledit traitement d'envoi des données au dispositif de relais de trame (30) avec l'ajout d'instructions pour mémoriser les données dans la mémoire cache (35) du dispositif de relais de trame,
le dispositif de relais de trame (30) est conçu pour exécuter un traitement de mémorisation d'une partie des données lors de la mémorisation des données,
le dispositif de mémorisation (10) est conçu pour exécuter un traitement d'accès aux données restantes parmi les données dans ledit dispositif de mémorisation alors que le dispositif de relais de trame est en cours de transmission de la partie des données à l'unité de niveau supérieur spécifiée, et
une instruction et une trame ayant une courte réponse sont conçues pour être envoyées ou reçues entre le dispositif de mémorisation et le dispositif de relais de trame.
